# FASCICULE DE BREVET EUROPEEN

(11) **EP 3 400 150 B1**
(45) Date de publication et mention de la délivrance du brevet: **26.05.2021**
(21) Numéro de dépôt: 17700068.4
(22) Date de dépôt: 04.01.2017
(51) Int. Cl.: B60N 2/28, B60N 2/01, B60N 2/02, B60N 2/06

(54) **NACELLE ET EMBASE POUR TRANSPORT D'UN ENFANT DANS UN VÉHICULE**
SITZ UND BASIS FÜR DEM TRANSPORT EINES KINDES IN EINEN FAHRZEUG
SEAT AND BASE FOR THE TRANSPORT OF A CHILD IN A VEHICLE

(30) Priorité: 05.01.2016 FR 1650060; 07.07.2016 FR 1656562
(43) Date de publication de la demande: 14.11.2018
(73) Titulaire: Dorel France, 49309 Cholet Cedex (FR)
(72) Inventeur: PASQUIER, Nicolas, 49700 Doue la Fontaine (FR); BONNET, Philippe, 85140 Essarts en Bocage (FR)
(74) Mandataire: Vidon Brevets & Stratégie
(86) Numéro de dépôt international: PCT/EP2017/050158
(87) Numéro de publication internationale: WO 2017/118667

(56) Documents cités:
- WO-A1-2006/087719
- WO-A1-2016/001387
- FR-A1- 2 917 021
- US-A- 5 685 603
- US-B1- 6 283 545
- US-B1- 6 793 283

## Description

### 1. Le domaine de l'invention

La présente invention concerne le domaine des équipements de puériculture, permettant le transport d'enfants en bas âge dans des véhicules, en toute sécurité. Plus précisément, l'invention concerne les ensembles, ou équipements, formés d'une embase destinée à être solidarisée au véhicule et d'un élément amovible apte à recevoir un enfant, pouvant être solidarisée à l'embase ou désolidarisée de celle-ci.

Plus précisément encore, l'invention, concerne de tels équipements, dans lesquels l'élément amovible est une nacelle, dans laquelle l'enfant est installé dans une position allongée. L'invention concerne également les embases et les nacelles, considérés indépendamment.

### 2. Solutions de l'art antérieur

Les enfants en bas âge, notamment ceux qui sont âgés de moins de 6 mois, peuvent être transportés en sécurité dans des véhicules automobiles dans deux types d'équipements de transport : soit dans des sièges autos, usuellement appelés « coques » (de type « groupe 0+ » selon le Règlement R44), dans lesquels ils sont essentiellement semi-assis, et qui sont installés dans les véhicules de telle sorte que l'enfant soit dos à la route, soit dans des nacelles (de type « groupe 0 » selon le Règlement R44) dans lesquels les enfants sont allongés, et qui sont installés dans le véhicule de telle sorte que les enfants soient étendus perpendiculairement à la route.

Les coques et les nacelles peuvent généralement être soit installées dans un véhicule, soit montées sur un châssis roulant de poussette, de façon à former une poussette ou un landau. Un adulte peut ainsi passer l'enfant d'une poussette ou d'un landau au véhicule automobile, sans avoir à sortir l'enfant de la coque ou de la nacelle.

Lors de l'installation de la coque ou de la nacelle dans le véhicule, il est nécessaire d'assurer une solidarisation très sûre et efficace de la coque ou de la nacelle au siège du véhicule, pour assurer la sécurité de l'enfant. Cette solidarisation peut se faire par le biais des ceintures de sécurité du véhicule. Cette solidarisation nécessite en général des manœuvres relativement complexes et fastidieuses, qui sont parfois mal exécutées par les adultes. La sécurité de l'enfant est ainsi compromise.

Selon une autre approche, qui tend à se généraliser, la solidarisation est assurée par le système d'accrochage normalisé connu sous le nom de « ISOFIX », qui utilise des éléments de fixation prévus à cet effet dans le véhicule.

Pour simplifier l'installation dans le véhicule d'une coque dans laquelle est installé un enfant en bas âge, il est souvent prévu des embases, qui sont solidarisées à un siège de véhicule et qui comportent un système d'accrochage spécifique leur permettant de recevoir et de solidariser facilement une coque d'un modèle spécifique. Une fois l'embase fixée au siège du véhicule par des moyens adaptés, ceinture de sécurité ou pinces de fixation ISOFIX, il est plus aisé d'y solidariser un siège auto ou une coque, notamment en position dos à la route.

De telles embases ne sont en revanche pas bien adaptées pour recevoir des nacelles. En effet, les nacelles sont installées en position perpendiculaire à la route, et occupent donc une grande largeur du siège du véhicule, supérieure à la largeur d'une embase.

En conséquence, une personne qui souhaiterait installer une nacelle sur une telle embase, devrait porter et maintenir la nacelle à bout de bras, au dessus de la banquette arrière du véhicule (après avoir introduit la nacelle dans l'espace correspondant, entre les dossiers avant et arrière, en tenant compte de l'ouverture disponible au niveau de la porte, et en maintenant la nacelle horizontale, si un enfant est présent), puis déposer la nacelle sur l'embase, de façon à assembler les deux éléments, sans voir précisément où sont les éléments de verrouillage de l'embase et de la nacelle, ou, en d'autres termes, à tâtons. Ceci n'est ni aisé, ni ergonomique, et en outre dangereux, car une mauvaise solidarisation (seulement certains des crochets verrouillés, par exemple) peut ne pas être détectée.

Des techniques, illustrées par exemple par les documents WO 2016/001387 et WO 2006/087719, ont été proposées pour les sièges auto pour faciliter l'installation de l'enfant dans le véhicule. Ces techniques mettent en œuvre des embases permettant respectivement un déplacement en translation uniquement, et un déplacement en translation et en pivotement du siège. Ces approches ne sont cependant pas adaptées aux nacelles.

Par ailleurs, cet encombrement important de la nacelle peut poser des problèmes dans certains véhicules, pour transporter simultanément un autre passager, et en particulier un autre enfant, par exemple dans un siège auto (lui-même le cas échéant également maintenu par des pinces ISOFIX).

L'homologation d'un siège ou d'une nacelle suppose qu'il respecte un certain nombre d'obligations, d'une part en termes de sécurité et d'autre part en termes d'encombrement. En effet, le format des pinces ISOFIX est bien sûr standardisé, pour qu'il soit possible d'installer tout équipement respectant le standard dans tout véhicule équipé. Notamment, un gabarit est défini, prévoyant un encombrement maximal que doit respecter l'équipement, et en particulier une nacelle, par rapport à la position des crochets ISOFIX montés dans le véhicule. Le respect de ce gabarit est donc une obligation, pour une nacelle, qui conduit malheureusement à un déport important de celle-ci sur la banquette, vers la portière opposée à celle par laquelle se fait l'installation de l'embase, qui conduit dans certains véhicules à l'impossibilité d'installer en même temps un siège auto.

### 3. Objectifs de l'invention

La présente invention a pour objectif de pallier ces inconvénients de l'art antérieur.

En particulier, l'invention a pour objectif, selon au moins un mode de réalisation, de simplifier et de rendre plus efficace la mise en œuvre et la solidarisation d'une nacelle dans un véhicule.

L'invention a ainsi en particulier pour objectif de faciliter l'installation des nacelles, dans de bonnes conditions de sécurité.

Un autre objectif de l'invention est, selon au moins un mode de réalisation, d'optimiser l'encombrement que représente la nacelle, et en particulier de permettre, selon les véhicules, l'installation d'un siège auto en complément, et/ou d'améliorer le confort des personnes transportées.

### 4. Exposé de l'invention

Ces objectifs, ainsi que d'autres qui apparaitront plus clairement par la suite, sont atteints à l'aide d'un équipement de transport d'un enfant en bas âge dans un véhicule, comprenant une embase destinée à être solidarisée à un siège dudit véhicule et une nacelle permettant d'accueillir ledit enfant en position allongée dans la direction longitudinale de la nacelle, et pouvant être solidarisée à ladite embase, ladite nacelle et ladite embase comprenant des éléments de guidage de formes complémentaires permettant de réaliser un guidage en translation entre ladite nacelle et ladite embase, selon une direction de translation sensiblement parallèle à la direction longitudinale de la nacelle.

Selon l'invention, ladite nacelle et/ou ladite embase comprend des moyens de sélection d'une position de transport parmi au moins deux positions de transport possibles, distribuées selon ladite direction de translation.

Ceci peut notamment permettre de définir au moins deux positions de transport :
- Au moins une première position, dite position de gabarit, conforme à un gabarit compatible avec tous les véhicules équipés de crochets ISOFIX (garantissant par exemple que l'équipement peut être utilisé dans tous les véhicules respectant une norme correspondante) ;
- au moins une deuxième position, dite position de gain de place, dans laquelle la nacelle est rapprochée de la portière du véhicule (sortant ainsi du gabarit défini par la norme), utilisable dans au moins certains véhicules, ménageant un espace disponible entre le bord dudit gabarit et la portière, du fait de l'implantation des crochets ISOFIX.

Ainsi, dans au moins certains véhicules permettant de prendre au moins une deuxième position, le déport de la nacelle vers la portière opposée peut être réduit, par exemple de l'ordre de 120 mm, et la place disponible en largeur être augmentée d'autant, ce qui peut par exemple faciliter l'installation d'un second enfant, dans un siège auto. On peut bien sûr prévoir une unique position de gabarit, et une ou plusieurs positions de gain de place.

Selon l'invention, on peut donc adapter le déport de la nacelle par rapport à son embase, dans les véhicules qui le permettent (qui seront par exemple identifiés après contrôle par le fabricant de l'équipement, qui tiendra compte notamment de la position des crochets ISOFIX dans le véhicule par rapport à la portière). Lorsque ceci est possible, il est ainsi possible de réduire le déport, tout en maintenant la sécurité de l'enfant, notamment en cas de choc latéral.

Par ailleurs, le guidage en translation permet une installation aisée, quelle que soit la position de transport sélectionnée. La sélection de la position de transport est faite une fois pour toute, ou à tout le moins rarement (par exemple lors d'un changement de véhicule. Ensuite, la nacelle peut être introduite, par l'une de ses extrémités, dans l'embase, depuis l'extérieur du véhicule, puis déplacée progressivement en translation pour venir prendre la position de transport souhaitée (ou, selon les modes de réalisation, la position de gabarit puis, le cas échéant, une position de gain de place), dans laquelle elle est fermement solidarisée à l'embase. Il n'est pas nécessaire de devoir maintenir, notamment à bout de bras, la nacelle au-dessus de l'embase, pour les assembler ensuite en les ramenant l'un vers l'autre par un mouvement vertical (ce mouvement étant cependant, dans certains modes de réalisation, possible également).

Selon un aspect particulier, l'équipement de transport comprend des moyens de verrouillage et de déverrouillage de la nacelle par rapport à l'embase, dans la position de transport sélectionnée.

Selon un première approche, les éléments de guidage de la nacelle sont mobiles sur cette dernière, entre au moins deux positions correspondant aux positions de transport.

L'utilisateur peut ainsi régler, à l'aide de moyens de sélection adaptés, la nacelle avant utilisation, de façon qu'elle prenne automatiquement la position de transport souhaitée, lors de son insertion sur l'embase.

Selon une deuxième approche, l'embase et/ou la nacelle peuvent porter au moins une butée réglable selon la direction de translation, pour définir les positions de transport.

Les moyens de sélection sont alors formés par la ou les butées réglables (le réglage pouvant être continu ou discret, selon les mises en œuvre).

Selon un aspect particulier, la butée réglable comprend et/ou coopère avec au moins un élément d'accrochage, apte à empêcher un déplacement en translation de la nacelle.

Selon une troisième approche, au moins un des éléments de guidage portent des éléments d'indexation, définissant les positions de transport.

Les moyens de sélection permettent de sélectionner une des positions de transport, correspondant à l'une des indexations.

Dans certains modes de réalisation, plusieurs de ces approches peuvent être combinées.

Ainsi, par exemple en cas d'accident, la nacelle est éloignée de la portière (qui peut être déformée et pénétrer partiellement dans l'habitacle du véhicule) et l'effet fusible absorbe une partie de l'énergie du choc.

Selon un aspect particulier, l'équipement de transport comprend des moyens de verrouillage et de déverrouillage de la nacelle par rapport à la embase, dans la position de transport sélectionnée.

Les moyens de verrouillage et de déverrouillage peuvent par exemple comprendre au moins un crochet mobile entre une position déverrouillée et une position verrouillée, monté sur l'embase.

Les moyens de verrouillage et de déverrouillage peuvent également comprendre, sur la nacelle, au moins une tige coopérant avec le ou les crochets.

La mise en œuvre d'une tige coopérant avec le ou les crochets permet notamment une solidarisation simple et efficace.

Selon un mode de réalisation particulier, cette tige peut être métallique, dans l'objectif d'être dotée d'une bonne résistance aux contraintes mécaniques.

Selon un mode de réalisation particulier, l'embase comprend quatre crochets, coopérant avec deux tiges de la nacelle.

Selon une caractéristique particulière, les crochets sont montés de façon à pouvoir également coopérer avec une coque ou un siège auto.

Ainsi, l'embase peut avantageusement être solidarisée à divers éléments pour recevoir un enfant, notamment en fonction de son âge, de son poids et/ou de sa taille. Une seule embase est nécessaire.

Selon une caractéristique particulière, la ou les tiges sont parallèles à la direction longitudinale de la nacelle.

Selon une caractéristique particulière, une des extrémités de la ou des tiges est incurvée vers le haut, de façon à entraîner le verrouillage d'un crochet sur la tige, lorsque l'extrémité entre en contact avec le crochet.

Ainsi, la forme de la tige et sa coopération avec le crochet permet un verrouillage aisé et fiable de l'embase à la nacelle, lors du guidage de cette dernière en translation. C'est le déplacement en translation qui assure un verrouillage « automatique » (c'est-à-dire sans action supplémentaire) de la nacelle à l'embase.

Selon un mode de réalisation particulier, au moins une des tiges est mobile par rapport à l'embase.

Ainsi, la tige mobile peut prendre au moins deux positions, correspondant à au moins deux positions de transport. Dans ce cas, l'embase peut ne disposer d'aucun moyen réglable, pour la sélection des positions de transport, cette sélection étant faite uniquement sur la nacelle.

Selon un autre mode de réalisation, la nacelle comprend deux tiges, s'étendant de part et d'autre de la nacelle, les tiges étant reliées entre-elles par une traverse solidaire de la nacelle.

Ainsi, cette traverse agit comme un pont de reprise d'effort qui permet de limiter les efforts/contraintes mécaniques appliquées sur les tiges en transmettant ces contraintes à la face inférieure de la nacelle. Ces contraintes sont donc dissipées dans la structure de la nacelle et la longueur des tiges peut être augmentée afin de proposer un nombre plus important de position d'utilisation de la nacelle sur l'embase, sans risque de déformation des tiges.

Selon un autre mode de réalisation, ou en complément, au moins une des tiges porte des éléments d'indexation permettant de bloquer en translation l'embase, en coopération avec au moins un des crochets, dans la position de transport sélectionnée.

Par exemple, la tige peut présenter une série de crans, dans lesquels un crochet vient prendre position.

Selon encore un autre mode de réalisation, une butée réglable selon la direction de translation peut comprendre et/ou coopérer avec au moins un élément d'accrochage, apte à empêcher le déplacement en translation de la nacelle.

Selon encore un autre mode de réalisation, la nacelle porte un peigne de réglage présentant une pluralité de rainures, définissant les positions de transport.

Selon un aspect particulier, le peigne de réglage coopère avec au moins un des crochets, permettant de bloquer en translation la nacelle dans la position de transport souhaitée.

Selon une caractéristique particulière, l'embase comprend au moins une portion formant coulisse, apte à guider en translation au moins un coulisseau complémentaire lié à une nacelle.

Selon une caractéristique particulière, le coulisseau et la coulisse forme un assemblage de type queue d'aronde.

Selon un mode de réalisation particulier, la coulisse et/ou le coulisseau porte des moyens d'indexation, définissant les positions de transport.

Selon une caractéristique particulière, ladite coulisse est évasée, de façon à permettre également un assemblage de la nacelle et de l'embase en déplaçant la nacelle sensiblement verticalement.

Ainsi, l'utilisateur peut installer la nacelle en deux phases successives. Lors d'une première phase d'installation, l'utilisateur peut placer la portion avant de la nacelle au niveau de l'embase, en regard du coulisseau de façon approximative. La partie évasée permet de tolérer un alignement imparfait, et guide progressivement la nacelle dans l'alignement prévu. Une partie du poids de la nacelle est alors supportée par l'embase, au bénéfice de l'utilisateur. Lors d'une seconde phase d'installation, l'utilisateur peut alors terminé le déplacement subséquent en translation de la nacelle précisément selon cet alignement.

Selon un autre mode de réalisation, le coulisseau présent plusieurs portions s'étendant selon au moins deux plans horizontaux parallèles situées à des hauteurs différentes par rapport à la face inférieure de la nacelle.

Dans un mode de réalisation, ceci permet que la nacelle passe d'une position d'introduction haute à une position d'installation finale (correspondant aux différentes positions de transport) plus basse que la position d'introduction. Ce décalage de hauteur peut notamment participer au maintien de la nacelle, aider au verrouillage et/ou au déverrouillage, et indiquer à l'utilisateur que la nacelle est bien en place.

Selon une caractéristique particulière, le coulisseau s'étend entre les deux tiges.

Selon une caractéristique particulière, le coulisseau présente une portion d'extrémité de largeur réduite.

Selon une caractéristique particulière, la portion d'extrémité présente une forme se développant progressivement jusqu'à une forme complémentaire de la coulisse.

Selon une caractéristique particulière, l'équipement de transport comprend des moyens de butée, interrompant la translation de la nacelle lorsque celle-ci est dans une position d'installation.

Selon une caractéristique particulière, les moyens de butée sont formés par une seconde portion incurvée d'au moins une des tiges et/ou par une butée formée sur la nacelle et coopérant avec une zone d'arrêt correspondante de l'embase.

Selon une caractéristique particulière, la nacelle comprend des poignées centrales, permettant son transport, et une poignée d'extrémité, permettant de contrôler le guidage en translation.

Ainsi, ces poignées permettent une manipulation aisée de la nacelle dans l'espace restreint offert par l'habitacle du véhicule, en particulier lors des étapes de solidarisation et de désolidarisation de la nacelle par rapport à l'embase, une main supportant l'essentiel du poids à l'aide des poignées centrales, et l'autre main équilibrant et guidant la nacelle pour l'assemblage avec l'embase.

Selon une caractéristique particulière, lorsque la nacelle est assemblée à l'embase dans au moins une des positions de transport, la portion arrière de la nacelle, correspondant à la zone recevant les pieds de l'enfant, est placée sensiblement au-dessus de l'embase, et la portion avant de la nacelle, correspondant à la zone recevant la tête de l'enfant, est placée en porte-à-faux par rapport à l'embase.

Selon une caractéristique particulière, l'écart entre les deux positions de transport extrêmes est compris entre 100 et 150 millimètres.

Selon une approche particulière, les moyens assurant le maintien dans une des positions de gain de place sont fusibles, de façon à permettre une translation de la nacelle vers une position de gabarit, de préférence la position dans laquelle la nacelle est la plus éloignée de la portière du véhicule (position distale), en cas de choc latéral supérieur à un seuil prédéterminé.

Il apparaît clairement que certains aspects décrits ci-dessus, par exemple relatifs au verrouillage ou à l'anti-basculement, peuvent être mis en œuvre également sur un équipement ne prévoyant qu'une unique position de la nacelle par rapport à l'embase.

L'invention concerne également la nacelle d'un équipement tel que décrit ci-dessus, considérée indépendamment.

### 5. Exposé des figures

L'invention sera mieux comprise à la lecture de la description suivante d'un mode de réalisation préférentiel, donné à titre illustratif et non limitatif, et accompagné des figures, parmi lesquelles :
- la figure 1 est une vue en perspective d'une embase pour siège auto selon un mode de réalisation de l'invention ;
- la figure 2 est une vue en perspective montrant la face inférieure d'une nacelle adaptée pour être fixée sur l'embase de la figure 1;
- les figures 3A et 3B illustrent le principe de l'invention ;
- la figure 4 est une vue de coté de l'embase de la figure 1 sur laquelle est montée une nacelle ;
- la figure 5 est une vue de coté de l'embase de la figure 1 sur laquelle est montée une coque ;
- La figure 6 est une vue schématique en perspective d'une embase selon le deuxième mode de réalisation de l'invention ;
- La figure 7 est une vue schématique de dessous d'une nacelle selon le deuxième mode de réalisation de l'invention ;
- La figure 8 est une vue schématique de côté d'une nacelle selon le deuxième mode de réalisation de l'invention ;
- La figure 9 est une vue schématique en perspective de l'interface entre l'embase et la nacelle selon le deuxième mode de réalisation de l'invention ;
- La figure 10A illustre une première variante de ce deuxième mode de réalisation ;
- La figure 10B illustre une deuxième variante de ce deuxième mode de réalisation ;
- Les figures 11A à 11D illustrent une mise en œuvre de l'invention adaptée au premier mode de réalisation ;
- la figure 12 est une vue en perspective d'une nacelle selon un troisième mode de réalisation ;
- la figure 13 est une vue en perspective montrant le dessous de la nacelle de la figure 12 partiellement représentée ;
- la figure 14 est une vue de détail des tiges métallique de la nacelle de la figure 12 ;
- la figure 15 est une vue de détail de la nacelle de la figure 12 lorsqu'elle est fixée sur une embase ;
- les figures 16A et 16B sont des vues de détail d'un premier mode de réalisation des moyens anti-basculement de la nacelle de la figure 12 ;
- la figure 17 est une vue en perspective, par l'arrière, de la nacelle de la figure 12;
- la figure 18 est vue montrant les moyens de sélection de la position de la nacelle de la figure 12 sur un crochet d'une embase représentée partiellement ;
- les figures 19A et 19B sont des vues de détail d'un deuxième mode de réalisation des moyens anti-basculement de la nacelle de la figure 12 ;
- la figure 20 représente le déplacement et différentes positions de la nacelle de la figure 12 sur une embase lors de son installation.

### 6. Description détaillée de modes de réalisation

Un équipement de transport selon l'invention permet le transport d'un enfant en bas âge en position allongée. Il permet donc d'assurer le confort de l'enfant lors des divers déplacements du véhicule, tout en garantissant sa sécurité. La dissociation de la nacelle et de l'embase confère de plus à cet équipement de transport un caractère modulable avantageux.

La nacelle peut ainsi, le cas échéant, être solidarisée à différents moyens de transport, selon les besoins de l'utilisateur. A titre d'exemple, la nacelle peut soit être solidarisée à un équipement de type châssis de poussette ou de landau prévu à cet effet, lors des déplacements effectués à pied, soit être solidarisée à une embase selon l'invention, lors de l'utilisation d'un véhicule.

L'enfant peut être transféré à l'intérieur du véhicule tout en restant à l'intérieur de la nacelle, ce qui améliore son confort tout en limitant la mise en œuvre de manipulations inutiles qui pourraient nuire à sa sécurité. La dissociation de la nacelle et de l'embase permet entre autres la mise en œuvre sur des périodes de temps prolongées de moyens de fixations fiables et sécurisés de l'embase au siège du véhicule, indépendamment de la fréquence d'utilisation de l'équipement de transport.

La complémentarité des formes de l'embase et de la nacelle permet quant à elle un agencement plus aisé de ces derniers, sans nuire pour autant au caractère modulable de l'équipement de transport. Le guidage en translation mis en œuvre entre la nacelle et l'embase selon une direction sensiblement parallèle à la direction longitudinale de la nacelle permet avantageusement de faciliter l'introduction et la manipulation de cette dernière dans l'habitacle du véhicule.

Selon l'invention, au moins deux positions de transport sont prévues, correspondant à des emplacements distincts de la nacelle par rapport à l'embase, selon l'axe de translation de la nacelle. Il est donc prévu des moyens de sélection, permettant de choisir l'une des positions de transport.

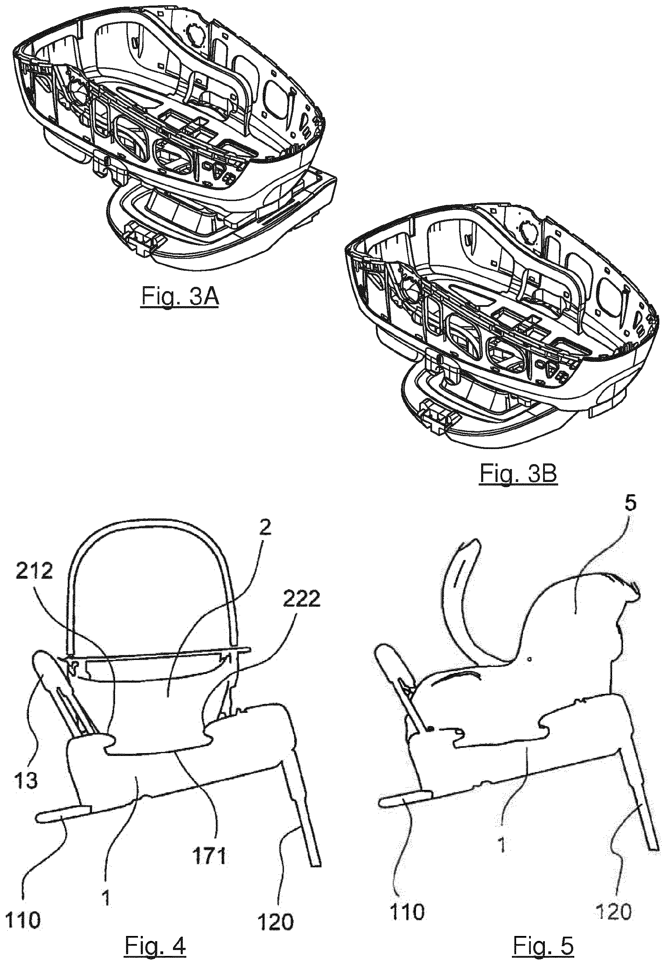

Les figures 3A et 3B illustrent ainsi deux exemples de position de transport, qui peuvent être, selon les cas, les deux seules positions prévues ou deux positions extrêmes, une ou plusieurs positions intermédiaires pouvant être disponibles.

La figure 3A illustre une position dite position de gabarit, qui répond aux exigences du gabarit du règlement européen R129. Cette position garantit donc que l'équipement formé de la nacelle et de l'embase peut être utilisé dans tout véhicule respectant lui-même ce règlement. Dans cette position, l'arrière de la nacelle est sensiblement affleurant avec l'embase, et l'avant de la nacelle déborde de façon relativement importante au-delà de l'embase.

Comme indiqué précédemment, ceci peut être gênant, dans certaines situations, par exemple, pour installer un siège auto pour enfant à côté de la nacelle, ou pour conserver un espace suffisant pour qu'un adulte puisse s'installer.

Dans la seconde position de transport, illustré par la figure 3B, la nacelle est donc décalée, c'est-à-dire rapprochée de la portière par laquelle elle a été installée, par rapport à la position de gabarit. Cette position, dite position de gain de place, est « hors gabarit » réglementaire, et peut donc ne pas être utilisable dans certains véhicules. Toutefois, dans de nombreux véhicules, l'espace entre l'arrière de la nacelle et la portière est relativement important, dans la position de gabarit (classiquement supérieur à 150 millimètres), et il s'agit d'un espace perdu, au détriment de l'espace de l'autre côté. Il est donc efficace de pouvoir décaler la nacelle, comme illustré sur la figure 3B.

L'écart entre la position de gabarit et la position de gain de place peut, par exemple, être de 120 millimètres. Une ou plusieurs positions intermédiaires peuvent être prévues, voire un réglage continu, pour s'adapter de façon efficace à un grand nombre de véhicules.

Bien sûr, une fois la position de transport choisie, celle-ci doit être figée : il ne faut pas que, pendant le transport, la nacelle puisse se déplacer en translation... (Dans certains modes de réalisation, on peut cependant prévoir un effet fusible, pour absorber l'énergie et/ou optimiser la position de l'enfant dans le véhicule). Des moyens de sélection d'une position de transport sont donc prévus, sur l'embase et/ou la nacelle. L'utilisateur sélectionne la position dans le transport choisi, et celle-ci est ensuite la position systématiquement disponible, lors de l'installation (jusqu'à un changement de sélection par l'utilisateur). En variante, les moyens de verrouillage peuvent assurer la sélection, en garantissant l'absence de translation, lorsque le verrouillage est activé, dans la position choisie par l'utilisateur lors de l'introduction et de la translation de la nacelle par rapport à l'embase.

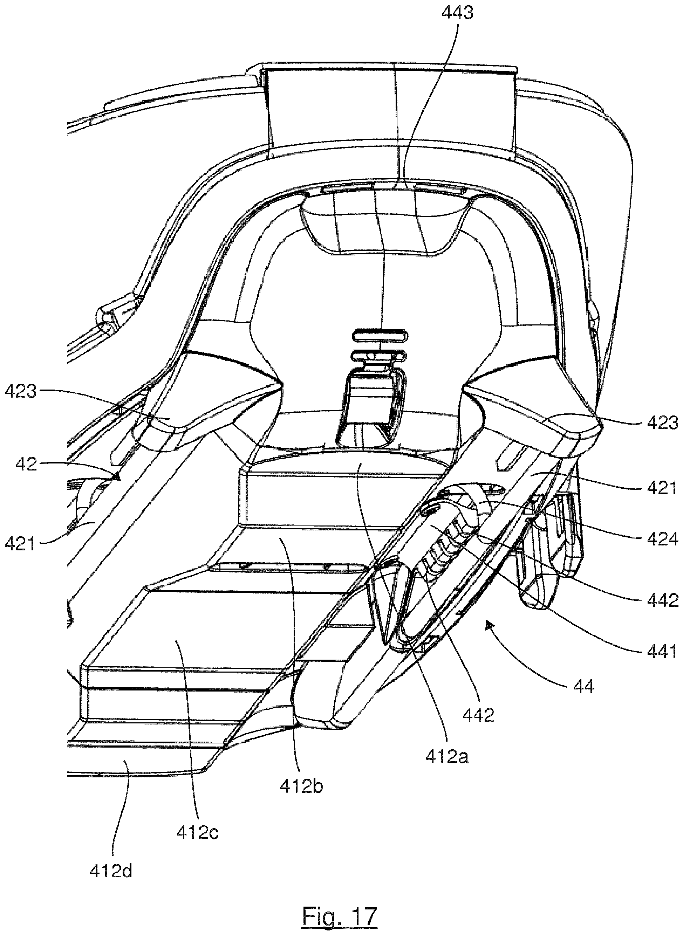

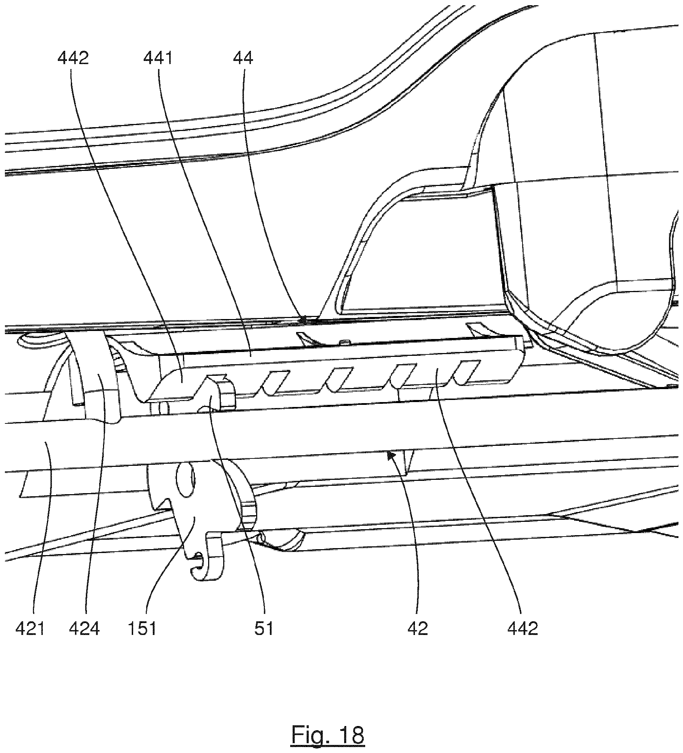

Un mode de réalisation de ces moyens de réglage de la position de la nacelle est illustré sur les figures 17 et 18.

### 6.1 Embase

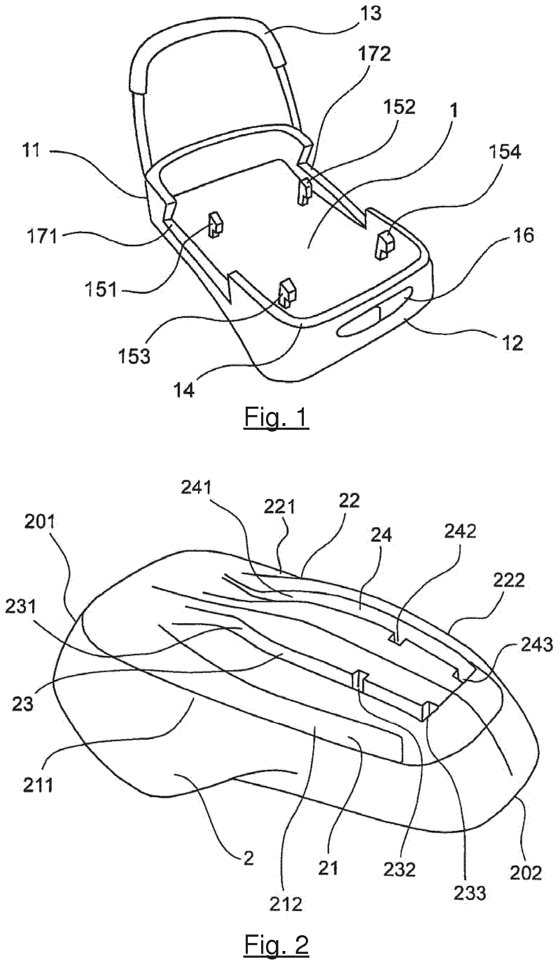

La figure 1 représente une embase 1 selon un mode de réalisation de l'invention. Les figures 4 et 5 montrent cette même embase 1, portant respectivement une nacelle 2 et une coque 5. Cette embase 1 est destinée à être montée sur le siège d'un véhicule. Elle comprend pour cela des moyens de solidarisation adaptés, connus de l'homme du métier, qui ne sont pas représentés sur la figure 1. Ces moyens de solidarisation peuvent notamment comprendre des pinces de fixation 110, connue sous le nom « pinces ISOFIX », fixées à proximité de l'extrémité arrière 11 de l'embase. De telles pinces de fixation 110 peuvent venir se solidariser sur des anneaux d'ancrage spécifiques situés entre l'assise et le dossier du siège d'un véhicule.

Les moyens de solidarisation peuvent également comprendre un troisième point de fixation, permettant de s'opposer au basculement du siège, par rotation autour de l'axe défini par les anneaux d'ancrage, par exemple sous la forme d'une sangle dite de « top tether » ou d'une jambe de support 120, fixée à proximité de l'extrémité avant 12 de l'embase. Cette jambe de support 120, s'étendant sensiblement verticalement vers le bas, permet à l'embase 1 de prendre appui sur le plancher du véhicule, à l'avant du siège.

Enfin, l'embase peut comprendre une barre anti-rebond 13, destinée à venir en appui contre le dossier du siège du véhicule, pour éviter toute rotation de l'embase 1 autour des anneaux d'ancrage ISOFIX.

### 6.2 Solidarisation d'une coque et d'une nacelle

Dans ce mode de réalisation, l'embase 1 comporte, de façon connue en elle-même, des moyens de réception d'un siège auto, par exemple une coque permettant le transport d'un enfant dans une position essentiellement semi-assise, dos à la route. Ces moyens de réception présentent une forme adaptée de la surface supérieure de l'embase 1, et notamment une bordure périphérique 14 permettant d'assurer un placement correct de la coque 5 sur l'embase 1, et par un ensemble de quatre crochets 151, 152, 153 et 154, permettant d'assurer le verrouillage de la coque sur l'embase 1.

Ces crochets sont mobiles en rotation autour d'un axe horizontal, entre une position de verrouillage, dans laquelle ils peuvent maintenir la coque 5 solidarisée à l'embase, et une position de déverrouillage, dans laquelle ils autorisent le retrait de la coque 5. Ils sont, par défaut, maintenus par des moyens de rappel tels que des ressorts dans la position de verrouillage. Une commande de déverrouillage 16, placée par exemple sur la face avant de l'embase 1, permet de déplacer ces crochets 151, 152, 153 et 154 de leur position de verrouillage vers leur position de déverrouillage, pour permettre le retrait de la coque 5 placée sur l'embase 1. Alternativement, cette commande de déverrouillage 16 peut être placée sur le dessus de l'embase 1, sur le côté, ou à tout emplacement accessible par un adulte.

Selon l'invention, l'embase 1 présente une forme lui permettant en outre de guider en translation une nacelle adaptée, dans une direction sensiblement horizontale et sensiblement perpendiculaire à la direction d'avancement du véhicule. Bien sûr, dans d'autres modes de réalisation, l'embase peut être adaptée pour recevoir uniquement une nacelle.

La structure de cette nacelle présente généralement une orientation prédéfinie qui détermine en conséquence l'orientation de l'enfant qui y est installé. Ainsi, on définit une portion arrière de ladite nacelle, correspondant à la zone recevant les pieds de l'enfant, et une portion avant de ladite nacelle correspondant à la zone recevant la tête de l'enfant.

On décrit ci-après trois exemples de mises en œuvre. Il est bien sûr possible de combiner, remplacer et/ou d'adapter certaines des caractéristiques décrites dans le cadre d'un des modes de réalisation, pour développer d'autres modes de réalisation, sans sortir du cadre de l'invention.

### 6.3 Solidarisation d'une nacelle selon un premier mode de réalisation

Dans un premier mode de réalisation représenté dans la figure 1, les moyens de guidage en translation de la nacelle 2 sont constitués par des découpes 171 et 172 de la bordure périphérique 14 de l'embase, ces découpes présentant une forme en queue d'aronde femelle.

Il est à noter que cette conformation de découpes ne constitue qu'un exemple de mode de réalisation possible de l'invention, l'homme du métier connaissant des variantes possibles à cette forme « en queue d'aronde » pour assurer le guidage en translation d'une pièce sur une autre pièce. Une de ces variantes est décrite plus en détail dans la description de la solidarisation de la nacelle selon un deuxième mode de réalisation.

Une nacelle 2, spécialement adaptée pour être portée par l'embase 1, est représentée sur les figures 2, 3 et 4. La partie intérieure de cette nacelle, destinée à accueillir un enfant en bas âge, est conformée de façon classique, connue de l'homme du métier. En revanche sa face inférieure, côté extérieur, visible sur la figure 2, présente une forme spécifique lui permettant de coopérer en coulissement avec l'embase 1. Ainsi, cette face inférieure de la nacelle 2 présente deux rainures 21 et 22, s'étendant sensiblement longitudinalement sur la face inférieure de la nacelle.

Ces rainures 21 et 22 présentent, sur une portion de guidage, respectivement 212 et 222, une forme complémentaire à la forme des découpes 171 et 172 en queue d'aronde de l'embase 1. Ces rainures 21 et 22 forment sur la face inférieure de la nacelle 2 une coulisse en queue d'aronde mâle, permettant un guidage en translation, selon un axe horizontal et perpendiculaire à la direction d'avancement du véhicule, par rapport à la queue d'aronde femelle définie par les découpes 171 et 172 de l'embase 1.

Ces rainures 21 et 22 de la face inférieure de la nacelle 2 présentent ici deux portions successives distinctes.

Les portions de ces rainures qui sont les plus proches de la portion arrière 202 de la nacelle 2 forment des portions de guidage, respectivement 212 et 222, présentant des formes complémentaires des formes en queue d'aronde des découpes 171 et 172, avec un jeu relativement peu important. Ainsi, quand ces portions de guidage 212 et 222 sont engagées dans les découpes en queue d'aronde 171 et 172 de l'embase 1, la nacelle est guidée en coulissement par la liaison coulisse formée entre les queues d'aronde mâle et femelle.

Les découpes en queue d'aronde 171 et 172 de l'embase 1 ont alors une fonction dite de « coulisse » (partie femelle de l'assemblage) lorsque les portions de guidage 212 et 222 ont une fonction dite de « coulisseau » (mâle de l'assemblage). Dans d'autres modes de réalisation, la partie femelle peut être placée sur la nacelle, et la partie mâle sur l'embase. Il est également possible de combiner plusieurs coulisses et/ou plusieurs coulisseaux.

Selon ce mode de réalisation, le seul mouvement possible de la nacelle 2 par rapport à l'embase 1 est alors un mouvement de translation selon la direction horizontale de cette coulisse.

Il est à noter que les rainures 21 et 22 sont fermées à leur extrémité la plus proche de la portion arrière 202 de la nacelle 2. Les extrémités de ces rainures peuvent ainsi venir en butée contre une découpe 171 ou 172 de l'embase 1.

Les portions de guidage 212 et 222, respectivement des rainures 21 et 22, se prolongent par des portions d'engagement, respectivement 211 et 221. Ces portions plus proches de la portion avant 201 de la nacelle 2 sont ouvertes à leur extrémité. Par ailleurs, ces portions d'engagement des rainures 21 et 22 présentent une forme évasée (« en entonnoir ») permettant un guidage de la nacelle 2 dans les découpes en queue d'aronde femelle 171 et 172, avec un jeu relativement important.

Cette forme évasée au niveau des portions d'engagement 211 et 221 permet un déplacement horizontal de la nacelle 2 dans sa direction longitudinale, un déplacement vertical, mais également un déplacement horizontal dans la direction d'avancement du véhicule. Ces portions d'engagement 211 et 221 permettent donc de faciliter la mise en place de la nacelle, et d'ajuster progressivement la position de la nacelle 2 lors de la translation, même lorsque cette dernière est introduite dans l'embase 1 selon une direction légèrement désaxée par rapport à l'axe défini par les découpes en queue d'aronde 171 et 172 de l'embase 1.

Ainsi, il est possible de placer la nacelle 2 sur l'embase 1 par un mouvement de translation dans la direction horizontale perpendiculaire à la direction d'avancement du véhicule, les découpes 171 et 172 s'engageant dans l'extrémité ouverte des rainures 21 et 22.

Il est également possible de placer la nacelle 2 en la posant sur l'embase 1, selon un mouvement sensiblement vertical, de telle sorte que les portions d'engagement 211 et 221 des rainures 21 et 22 viennent s'engager dans les découpes en queue d'aronde 171 et 172. Un déplacement subséquent en translation de la nacelle selon sa direction longitudinale suffit alors à mettre les portions de guidage 212 et 222 des rainures 21 et 22 en contact avec les découpes 171 et 172. La nacelle 2 est alors guidée en translation par rapport à l'embase 1, sans que son déplacement vertical soit possible.

Les portions de guidage 212 et 222 de la nacelle et les découpes 171 et 172 de l'embase forment ensemble des éléments de guidage complémentaires permettant de réaliser un guidage en translation entre la nacelle et ladite embase, selon une direction de translation sensiblement parallèle à la direction longitudinale de la nacelle.

### 6.4 Rainures de verrouillage selon le premier mode de réalisation

La face inférieure de la nacelle 2 présente également, entre les rainures 21 et 22, deux autres rainures longitudinales 23 et 24. Ces rainures 23 et 24 présentent des formes adaptées pour coopérer avec les crochets de verrouillage 151 et 152 de l'embase 1. Il est à noter que, quand la nacelle 2 est installée sur l'embase 1, seule l'une de ces rainures, 23 ou 24 est destinée à coopérer avec les crochets 151 et 152. La présence des deux rainures 23 et 24 vise à permettre l'installation de la nacelle 2 sur l'embase 1 dans deux positions distinctes, la portion avant 201 de la nacelle 2 étant à droite ou à gauche par rapport à la direction d'avancement du véhicule.

Les crochets 151 et 152, sont normalement, en l'absence d'action sur les moyens de commande 16, maintenus par des moyens de rappel dans leur position de verrouillage. Chacune de ces rainures 23 et 24 présente une extrémité ouverte, dans la direction de la portion avant 201 de la nacelle. Par ailleurs, à proximité de ces extrémités, chacune de ces rainures est suffisamment large pour permettre l'introduction facile des crochets 151 et 152 dans une des rainures, quand la nacelle 2 est posée en position intermédiaire sur l'embase 1. Le déplacement en translation de la nacelle, depuis cette position intermédiaire vers une position dans laquelle la nacelle est guidée en coulissement sur l'embase, entraine un déplacement des crochets 151 et 152, dans la rainures 23 ou 24 vers la portion arrière 202 de la nacelle.

Les rainures 23 et 24 présentent chacune une zone de louvoiement, respectivement 231 et 241. Quand les crochets 151 et 152 se déplacent dans ces zones vers la portion arrière 202 de la nacelle 2, la forme de la rainure oblige les crochets 151 et 152 à passer de leur position de verrouillage à leur position de déverrouillage. Ce changement de position se fait à l'encontre des moyens de rappel qui tendent à rappeler les crochets 151 et 152 vers leur position de verrouillage.

Dans la portion des rainures 23 et 24 située à proximité de la portion arrière 202 de la nacelle 2, des logements 232, 233, 242 et 243 sont prévus, en bordure des rainures, pour recevoir les crochets 151 et 152. Quand ces crochets, coulissant dans une rainure 23 ou 24, arrivent en regard de ces logements, ils sont repoussés par leurs moyens de rappel dans ces logements, dans lesquels ils reprennent leur position de verrouillage. Selon au autre mode de réalisation, ces crochets peuvent uniquement coulisser dans une rainure 23 ou 24, la fonction de blocage du coulissement étant assurée par un autre moyen.

Selon une mise en œuvre de l'invention, ces logements 232, 233, 242 et 243 peuvent être mobiles en translation, et par exemple montés sur une platine coulissante (non illustrée). Ainsi, en déplaçant la platine par rapport à la structure de la nacelle, on modifie la position dans laquelle elle peut être solidarisée à l'embase, de façon à définir plusieurs positions de transport, comme illustrées par les figures 3A et 3B.

Le déplacement de la platine et donc des logements peut se faire de façon continue, par exemple à l'aide d'une vis sans fin (un moyen de blocage de celle-ci étant bien sûr prévu, assurant la sélection de la position de transport souhaitée et garantissant qu'elle ne peut se modifier sans intervention d'un utilisateur), ou de façon indexée, entre deux positions ou plus, par exemple à l'aide d'une crémaillère ou d'un pion pouvant coopérer avec plusieurs lumières correspondant chacune à l'une des positions de transport.

Il est également possible de prévoir une pluralité de logements 232, 233, 242 et 243 formés sur la nacelle, et correspondant à plusieurs (au moins deux) positions de transport. Dans ce cas, selon une première approche, l'utilisateur peut choisir à chaque installation la position de transport, en faisant coulisser plus ou moins la nacelle avant le verrouillage (les butées garantissant que l'on ne peut pas aller au-delà de la position de transport extrême). Selon une deuxième approche, l'utilisateur doit sélectionner à l'avance la position de transport souhaitée, de façon que seul le jeu de logements correspondant soit disponible, les autres étant par exemple obturés par des éléments d'obturation amovibles. Il peut par exemple s'agir d'un élément de paroi coulissant, présentant deux ouvertures aptes à venir en regard des logements sélectionnés.

Une action sur les moyens de commande 16 de l'embase, permettant de faire passer les crochets 151 et 152 de leur position de verrouillage à leur position de déverrouillage est alors nécessaire pour faire sortir les crochets 151 et 152 des logements 232 et 233 ou 242 et 243, et permettre de nouveau le coulissement de la nacelle. L'engagement des crochets 151 et 152 dans ces logements permet donc de bloquer le coulissement de la nacelle 2 par rapport à l'embase 1, une action sur la commande 16 de l'embase 1 pouvant désactiver ce blocage. Une fois bloquée par les crochets 151 et 152, qui suppriment le seul degré de liberté de la nacelle 2 montée coulissante par rapport à l'embase 1, cette nacelle est parfaitement assemblée à l'embase 1.

Dans ce mode de réalisation représenté par les figures, les rainures 23 et 24 comportent chacune deux logements, visant à coopérer avec les deux crochets 151 et 152. Il est cependant possible de mettre en œuvre des modes de réalisation dans lesquels la face inférieure de la nacelle présente une conformation lui permettant de coopérer avec un seul crochet, 151 ou 152, ou toute combinaison de un ou plusieurs crochets.

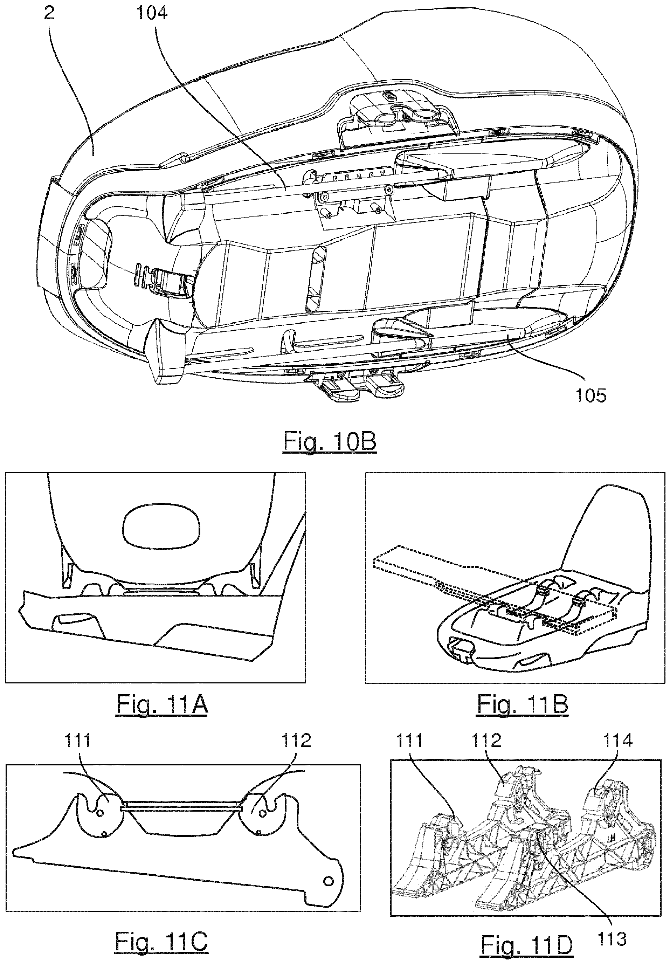

Les figures 11A à 11D illustrent une variante d'un assemblage tel que décrit précédemment. La nacelle comprend un coulisseau 1301 guidé notamment dans quatre éléments de verrouillage 1302 à 1305. Selon les modes de réalisation, ces moyens de verrouillage peuvent être des pinces, assurant un blocage suffisant pour éviter toute translation, ou des crochets munis, par exemple, d'un ou plusieurs pions, coopérant avec des logements en creux formés sur le coulisseau 1301, toujours pour éviter toute translation lorsque les moyens de verrouillage sont actifs.

Selon cette approche, la sélection dans la position de transport se fait à chaque installation. Selon une autre approche, elle peut être présélectionnée, par exemple à l'aide d'une butée réglable en translation (non représentée) sur l'embase et/ou sur la nacelle, pour arrêter la translation de la nacelle dans la position sélectionnée.

### 6.5 Solidarisation d'une nacelle selon un deuxième mode de réalisation

Selon ce deuxième mode de réalisation particulier, l'embase peut être du type décrit dans le document de brevet EP 3 371 001.

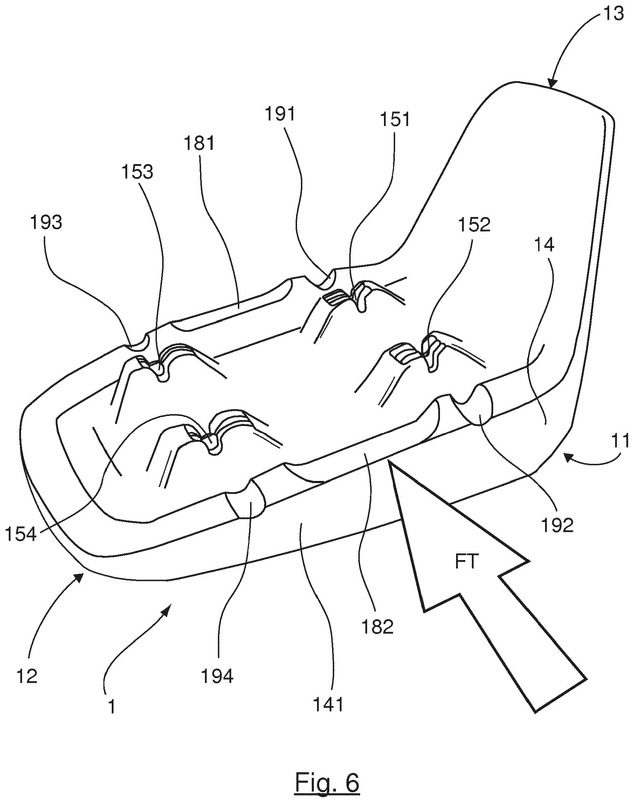

Comme illustré par la figure 6, l'embase 1 comprend, pour le guidage en translation d'une nacelle 3 adaptée, dans une direction sensiblement horizontale et sensiblement perpendiculaire à la direction d'avancement du véhicule, des découpes, ou échancrures, centrales 181 et 182 de la bordure périphérique 14. Lorsque considérées selon une vue de côté de l'embase 1, ces découpes centrales 181 et 182 sont alignées selon une direction correspondant à la direction de coulissement de l'embase, illustrée par la flèche F1, dans le prolongement l'une de l'autre, dans l'espace défini entre les crochets 151, 152, 153 et 154.

Ces découpes centrales 181 et 182 présentent une forme évasée, avec une base sensiblement plane et deux extrémités incurvées. Il est cependant à noter que cette conformation des découpes ne constitue qu'un exemple de mode de réalisation possible de l'invention, l'homme du métier connaissant des variantes possibles à cette forme, telle que la forme « en queue d'aronde » décrite ci-dessus.

L'embase 1 comprend de plus, sur sa bordure périphérique 14 des encoches 191, 192, 193 et 194 placées de part et d'autre des découpes centrales 181 et 182. Lorsque considérées selon une vue de côté de l'embase 1, les couples d'encoches 191, 192 et 193, 194 sont respectivement alignés parallèlement à la direction de coulissement et avec des supports 1510, 1520, 1530 et 1540, de crochets 151, 152 et 153, 154 respectivement. Dans le mode de réalisation de la figure 6, ces encoches 191 à 194 présentent une forme sensiblement demi-cylindrique.

Les crochets 151 à 154 sont agencés dans les supports associés 1510, 1520, 1530 et 1540, formés de manière que ces derniers définissent, en combinaison avec leur crochet respectif, une zone d'enserrement délimitée de façon suffisante pour maintenir efficacement la nacelle.

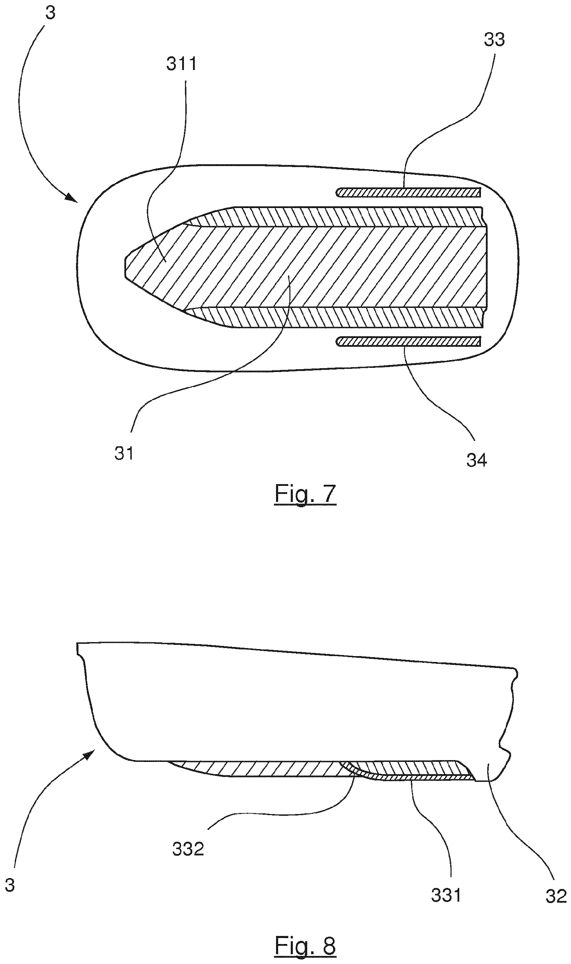

Une nacelle 3, spécialement adaptée pour être portée par l'embase 1, est représentée sur les figures 7 et 8. Cette nacelle 3 se distingue notamment de la nacelle 2 du premier mode de réalisation de l'invention, par la conformation de sa face inférieure, visible sur les figures 7 et 8.

Cette nacelle 3 comprend ainsi, sur sa face inférieure, un bossage formant coulisseau 31, qui s'étend selon une direction longitudinale. Ce coulisseau 31 présente une forme complémentaire de la forme de rainure incurvée des découpes 181 et 182. Il permet ainsi le guidage en translation selon un axe horizontal (F1), perpendiculaire à la direction d'avancement du véhicule lorsque l'embase est installé dans le véhicule, de la nacelle 3 dans les découpes complémentaires 181 et 182 de la bordure périphérique 14, ces découpes 181 et 182 formant coulisseau.

Ainsi, le coulisseau 31 de la nacelle et les découpes 181, 182 de l'embase forment ensemble des éléments de guidage complémentaires permettant de réaliser un guidage en translation entre la nacelle et ladite embase, selon une direction de translation sensiblement parallèle à la direction longitudinale de la nacelle.

La nacelle 3 présente également une butée 32, formée à l'arrière. La mise en contact selon une liaison de type appui plan de la butée 32 avec une zone d'arrêt correspondante de l'embase 1, ménagée sur l'une des faces extérieures 141 de la bordure périphérique 14, permet notamment d'interrompre le mouvement de translation de la nacelle 3 lorsque celle-ci est dans une position d'installation. Cette interruption peut également être assurée au niveau des crochets et/ou des supports de crochet.

La nacelle 3 comprend de plus deux tiges cylindriques métalliques 33, 34 disposées de part et d'autre du coulisseau 31, chacune de ces tiges étant constituée d'une portion rectiligne 331, et d'au moins une portion incurvée 332, à l'extrémité de la tige orientée vers l'avant de la nacelle.

Plus précisément, la portion rectiligne 331 de la tige 33 s'étend selon une direction sensiblement parallèle à la direction longitudinale de la nacelle 3 à partir de la butée 32 et est agencée de manière à pouvoir, lorsque le bossage 31 coulisse dans les découpes 181 et 182, venir s'engager dans une des encoches 194 de la bordure périphérique 14. A cet effet, la portion rectiligne 331 de la tige 33 est dimensionnée de manière à présenter une forme sensiblement complémentaire à la forme incurvée du renfoncement.

La portion d'extrémité 332 est incurvée vers le haut et s'étend dans le prolongement de la portion rectiligne 331, en formant ici un angle obtus avec cette dernière. Cette portion incurvée 332 est solidarisée avec la face inférieure de la nacelle 3. La formation entre la portion rectiligne 331 et la portion incurvée 332 d'un angle obtus a pour avantage de permettre, lors du coulissement de la nacelle, le verrouillage des crochets 151 à 154 autour des barres et, notamment, des portions 331.

Il est cependant à noter que la formation par la portion incurvée 332 d'un angle obtus avec la portion rectiligne 331 ne constitue qu'un exemple de mode de réalisation possible de l'invention. Selon un autre mode de réalisation présentant une configuration autre des crochets, l'homme du métier aurait ainsi pu opter pour un agencement de la portion incurvée 332 tel que cette dernière forme avec la partie rectiligne 331 un angle droit ou aigu.

La portion incurvée 332 telle que représentée sur les figures 7 et 8 présente un faible rayon de courbure à son extrémité proximale de la portion rectiligne 331 et un rayon de courbure plus élevé sur la partie subséquente de sa longueur, conférant ainsi à cette dernière partie une forme sensiblement rectiligne.

Il est cependant à noter que la mise en œuvre de ces différents rayons de courbure sur la portion incurvée 332 n'est donnée qu'à titre d'exemple non limitatif, l'homme du métier ayant pu selon un autre mode de réalisation opter pour la mise en œuvre de rayons de courbure appartenant à des gammes de valeurs différentes.

Les caractéristiques propres à la tige 33 et à ses constituants s'appliquent *mutatis mutandis* à la tige 34.

De manière préférentielle, le bossage 31 présente une portion d'extrémité 311 de largeur réduite. Cette portion de largeur réduite est ménagée à proximité de la portion avant de la nacelle 3. Le bossage 31 présente une forme, par exemple en pointe ou en triangle tronqué, se développant progressivement de l'avant vers l'arrière de la nacelle, jusqu'à une portion de forme complémentaire des découpes 181 et 182 formant coulisse.

Cette portion de largeur réduite permet de faciliter l'introduction de la nacelle dans l'embase, en ajustant progressivement la position de la nacelle 3 lorsque cette dernière est introduite dans l'embase 1 selon une direction légèrement désaxée par rapport à l'axe défini par les découpes 181 et 182 de l'embase 1.

De manière analogue au premier mode de réalisation de l'invention et tel que représenté partiellement à la figure 6, il est ainsi possible de placer la nacelle 3 sur l'embase 1 par un mouvement de translation dans la direction horizontale perpendiculaire à la direction d'avancement du véhicule, le bossage 31 et les tiges 33 et 34 s'engageant respectivement par coulissement dans la découpe centrale 182 et les renforcements 194 et 192.

Selon ce mode de réalisation, il est également possible de placer la nacelle 3 en la posant directement sur l'embase 1, selon un mouvement sensiblement vertical, de telle sorte que le bossage 31 et les tiges 33 et 34 viennent respectivement s'engager dans les échancrures centrales 181, 182 et les encoches 191 à 194, pendant que les crochets 151 à 154 viennent en prise avec les tiges 33 et 34. Les formes évasées des échancrures 181, 182 et des encoches 191 à 194 permettent cette introduction par le dessus (contrairement à une forme en queue d'aronde ou similaire).

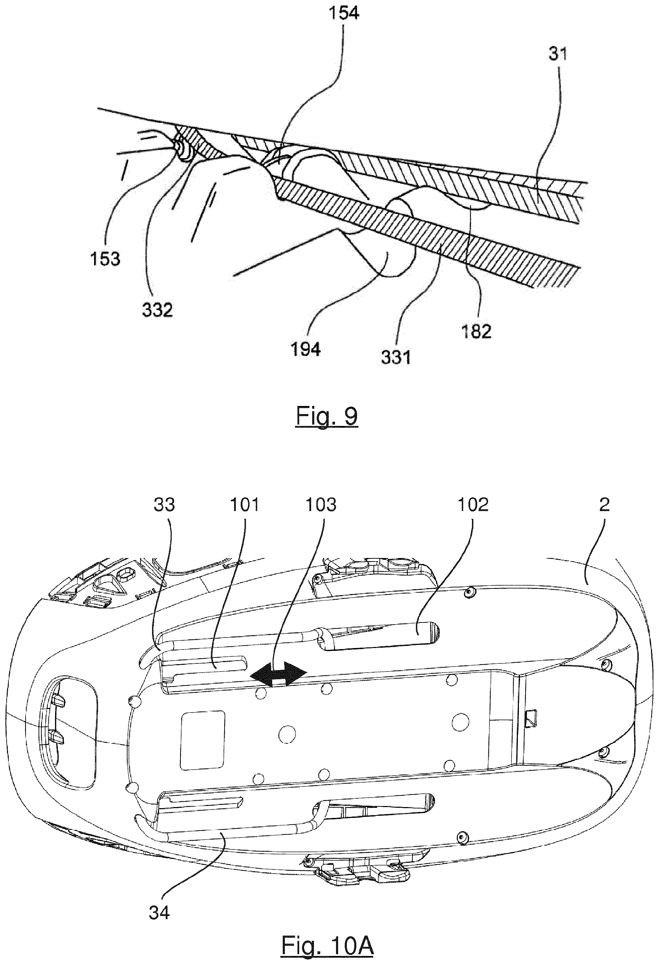

Lors d'un déplacement en translation de la nacelle 3 selon sa direction longitudinale et tel que représenté par la figure 9, la portion incurvée 332 de la tige coulisse le long de l'encoche 194, puis atteint le support de crochet 1540, et vient ensuite en contact avec le crochet 154. Le déplacement en translation de la nacelle 3 force le crochet 154 à passer de sa position de déverrouillage à sa position de verrouillage, lors du passage de la portion incurvée 332 à travers la zone d'enserrement du crochet 154. Le crochet 154 enserre alors, en combinaison avec le renforcement 1540 associé, la portion rectiligne 331 de la tige 33. De manière préférentielle, le dimensionnement du crochet 154 et du renforcement 1540 associé est réalisé de manière à ce que le diamètre de la zone d'enserrement soit sensiblement supérieur à celui de la section transversale de la portion rectiligne 331. Le passage du crochet 154 en position de verrouillage permet ainsi de limiter les déplacements latéraux de la portion rectiligne 331 tout en permettant ses déplacements longitudinaux.

La poursuite du coulissement de la nacelle par rapport à l'embase permet d'atteindre le second crochet 153, qui se verrouille de la même façon sur la tige.

En raison de la conformation du crochet 154 par rapport à celle de la tige 33, le passage du crochet 154 vers sa position verrouillée autour de la portion rectiligne 331 de la tige empêche tout passage ultérieur de la portion incurvée 332 de la tige au travers de la zone d'enserrement, de par le seul déplacement en translation de la nacelle 3 selon une direction opposée.

Le comportement du crochet 154 lors sa mise en contact avec l'extrémité incurvée 332 de la tige 33 et notamment son verrouillage subséquent sur cette tige s'applique donc *mutatis mutandis* au passage des tiges 33 ou 34 dans les zones d'enserrement des crochets 153, 152 et 151.

La longueur de la portion rectiligne 331 est sensiblement égale à la distance séparant, selon un axe horizontal transversal de l'embase 1, l'encoche 194, de la bordure périphérique 14, du crochet 153 qui en est le plus éloigné. Ainsi, lorsque les crochets 154 et 153 sont verrouillés autour de la barre métallique 33, l'action combinée du crochet 153, sur la portion incurvée 332 de la tige, et de la butée 32, sur la zone d'arrêt correspondante de la bordure périphérique 14, permet de supprimer le seul degré de liberté de la nacelle 3 montée coulissante par rapport à l'embase 1. La nacelle 3 est alors en position d'installation et est parfaitement assemblée à l'embase 1.

Une action sur des moyens de commande 16 de l'embase 1 permettant de faire passer les crochets 151 à 154 de leur position de verrouillage à leur position de déverrouillage est alors nécessaire pour permettre de nouveau le guidage en translation de la nacelle 3 dans l'embase 1.

Plusieurs approches peuvent être envisagées, pour permettre la sélection d'au moins deux positions de transport.

Ainsi, comme illustré sur la figure 10A, les tiges 33, 34 peuvent être mobiles par rapport à la nacelle, en translation parallèlement à l'axe de translation de cette nacelle. Des lumières oblongues 101, 102 sont prévues dans la coque de la nacelle pour permettre le déplacement de la tige 33. Un mécanisme de blocage (non représenté est bien sûr prévu). La position illustrée sur la figure 10A correspond à la position de gabarit. La position correspondant à l'autre extrémité des lumières 101 et 102 correspond à la position de gain de place.

Selon une autre approche, illustrée en figure 10B, les tiges 104 et 105 sont de longueurs supérieures à celles des tiges 33, 34 de la figure 10A, et sont donc adaptées à être mises en œuvre dans toutes les positions de transport. Des moyens de sélection dans la position de transport, non représentés, doivent bien sûr être mis en œuvre, pour sélectionner de façon efficace la position de transport choisie. Comme pour d'autres modes de réalisation décrits, il peut notamment s'agir d'une butée réglable, sur l'embase et/ou sur la nacelle (par exemple sur les tiges elles-mêmes).

### 6.6 Solidarisation d'une nacelle selon un troisième mode de réalisation

Selon ce troisième mode de réalisation particulier, l'embase est identique à l'embase illustrée sur la figure 6. Les références en lien avec l'embase sont donc les mêmes que pour le mode de réalisation précédent.

Cette embase 1 est adaptée pour le guidage en translation d'une nacelle 4 dans une direction sensiblement horizontale et sensiblement perpendiculaire à la direction d'avancement du véhicule.

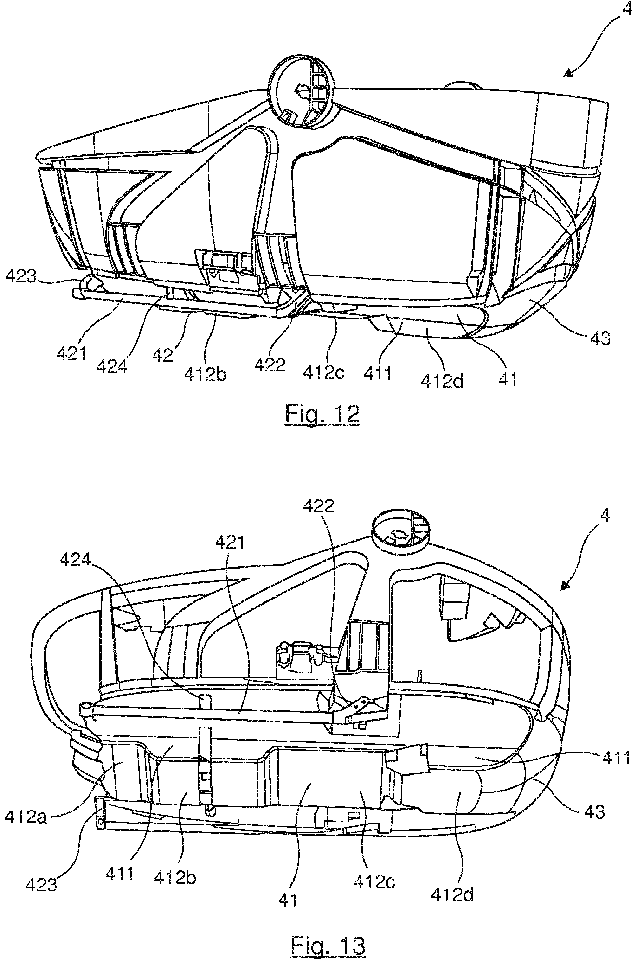

Cette nacelle 4, spécialement adaptée pour être portée par l'embase 1, est représentée sur les figures 12 et 13. Cette nacelle 4 se distingue notamment des nacelles 2 et 3 des premier et deuxième modes de réalisation de l'invention, par la conformation de sa face inférieure, visible sur les figures 12 et 13.

La nacelle 4 comprend ainsi, sur sa face inférieure, un coulisseau 41 qui s'étend selon une direction longitudinale. Les bords latéraux 411 du coulisseau 41 présentent une forme complémentaire de la forme de rainure incurvée des découpes centrales 181 et 182 de l'embase 1. Cela permet ainsi le guidage en translation selon l'axe horizontal (F1), lorsque l'embase 1 est installée dans le véhicule, de la nacelle 4 dans les découpes complémentaires 181 et 182 de la bordure périphérique 14.

Ainsi, le coulisseau 41 de la nacelle et les découpes 181 et 182 de l'embase forment ensemble des éléments de guidage complémentaires permettant de réaliser un guidage en translation entre la nacelle et ladite embase, selon une direction de translation sensiblement parallèle à la direction longitudinale de la nacelle.

Le coulisseau 41 présente un profil particulier qui comprend, dans ce mode de réalisation, quatre sections 412.

La première section 412a est situé à l'arrière de la nacelle et présente un profil rectiligne qui s'étend dans un plan horizontal. Cette première section 412a est donc plane.

Une deuxième section 412b prolonge la première section 412a environ jusqu'au milieu de la nacelle 4. Cette deuxième section présente un profil en U dont les branches sont légèrement inclinées afin de présenter un angle obtus entre les branches et la base du U. La base du U s'étend dans un plan parallèle au plan de la première section 412a.

Plus précisément, la deuxième section 412b s'étend dans un plan dont la distance par rapport à la face inférieure de la nacelle 4 est plus importante que la distance entre le plan horizontal de la première section 412a et la face inférieure de la nacelle. La deuxième section 412b forme donc un bossage par rapport à la première section 412a.

Une troisième section 412c s'étend dans le prolongement de la deuxième section 412b, c'est-à-dire à partir du milieu de la nacelle vers l'avant de la nacelle. Cette troisième section 412c est plane et s'étend sensiblement dans le même plan que la première section 412a.

Ainsi, les première 412a et troisième 412c sections sont séparées par la deuxième section 412b qui s'étend dans un plan différent. La jonction entre la deuxième section 412b et les première 412a et troisième 412c sections est obtenue grâce à l'inclinaison des branches du U de la deuxième section 412b, afin d'obtenir une liaison progressive, comme illustrée sur la figure 17.

La quatrième section 412d s'étend dans le prolongement de la troisième section 412c et vers l'avant de la nacelle 4. Cette quatrième section 412d s'étend sensiblement dans le même plan que la deuxième section 412b, et donc dans un plan différent des première et troisième sections.

La quatrième section 412d présente une portion de liaison avec la troisième section 412c qui s'étend de façon inclinée afin de fournir une jonction progressive entre les troisième 412c et quatrième 412d sections.

La nacelle 4 comprend de plus deux tiges cylindriques métalliques 42 disposées de part et d'autre du coulisseau 41, chacune de ces tiges étant constituée d'une portion rectiligne 421, et d'au moins une portion incurvée 422, à l'extrémité de la tige orientée vers l'avant de la nacelle.

Plus précisément, la portion rectiligne 421 de la tige 42 s'étend selon une direction sensiblement parallèle à la direction longitudinale de la nacelle 4 à partir de la l'arrière de la nacelle, c'est-à-dire sensiblement au voisinage du début de la première portion 412a du coulisseau 41.

Cette portion rectiligne 421 est agencée de manière à pouvoir, lorsque le coulisseau 41 coulisse dans les découpes 181 et 182, venir s'engager dans une des encoches 192, 194 de la bordure périphérique 14 de l'embase 1. A cet effet, la portion rectiligne 421 de la tige 42 est dimensionnée de manière à présenter une forme sensiblement complémentaire à la forme incurvée du renfoncement de l'encoche 194.

La portion d'extrémité 422 est incurvée vers le haut et s'étend dans le prolongement de la portion rectiligne 421, en formant ici un angle obtus avec cette dernière. Cette portion incurvée 422 est solidarisée avec la face inférieure de la nacelle 4. La formation entre la portion rectiligne 421 et la portion incurvée 422 d'un angle obtus a pour avantage de permettre, lors du coulissement de la nacelle, le verrouillage des crochets 151 à 154 autour des barres et, notamment, des portions 421.

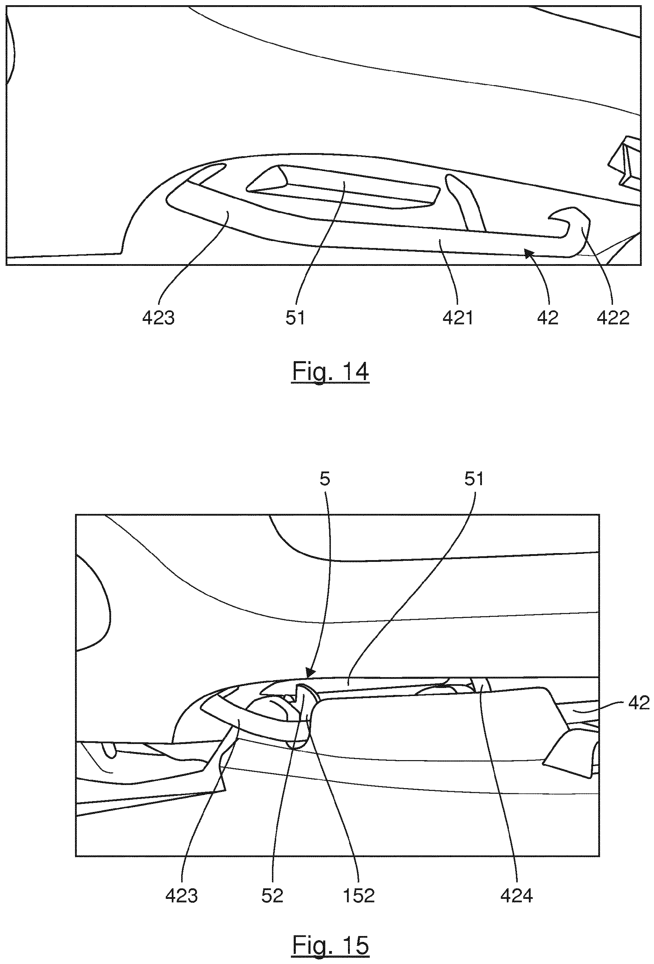

L'extrémité de la tige orientée vers l'arrière de la nacelle est, comme illustrée sur les figures 12 et 13, reliée à la face inférieure de la nacelle 4 par un montant 423 qui s'étend perpendiculairement à la tige 42. Dans une variante illustrée sur les figures 14 et 15, l'extrémité arrière de la tige 42 présente une portion 423 incurvée qui s'étend dans le prolongement de la portion rectiligne et vers l'arrière et la face inférieure de la nacelle 4.

Ces tiges métalliques 42 comprennent également une traverse 424 qui s'étend perpendiculairement à l'axe longitudinal de la nacelle. Cette traverse 424 se situe sensiblement au milieu de la longueur de la tige 42 et relie les tiges l'une à l'autre.

La traverse 424 est solidaire de la face inférieure de la nacelle 4. Ainsi, la traverse 424 agit comme un pont de reprise d'effort qui permet de limiter les efforts/contraintes mécaniques appliquées sur les tiges en transmettant ces contraintes à la face inférieure de la nacelle 4. Ces contraintes sont dissipées dans la structure de la nacelle 4 et la longueur des tiges 42 peut donc être augmentée afin de proposer un nombre plus important de position d'utilisation de la nacelle 4 sur l'embase 1, sans risque de déformation des tiges 42.

L'avant de la nacelle peut, dans ce mode de réalisation, présenter une portion incurvée 43, illustrée sur la figure 12, qui relie la paroi latérale de la nacelle à la surface inférieure. Cette portion incurvée 43 s'étend dans le prolongement de la quatrième portion 412d et s'étend vers l'avant de la paroi latérale de la nacelle 4.

Cette portion incurvée 43 présente une forme complémentaire des découpes 181 et 182 formant coulisse afin de faciliter l'introduction de la nacelle dans l'embase, en ajustant progressivement la position de la nacelle 4 lorsque cette dernière est introduite dans l'embase 1 selon une direction légèrement désaxée par rapport à l'axe défini par les découpes 181 et 182 de l'embase 1.

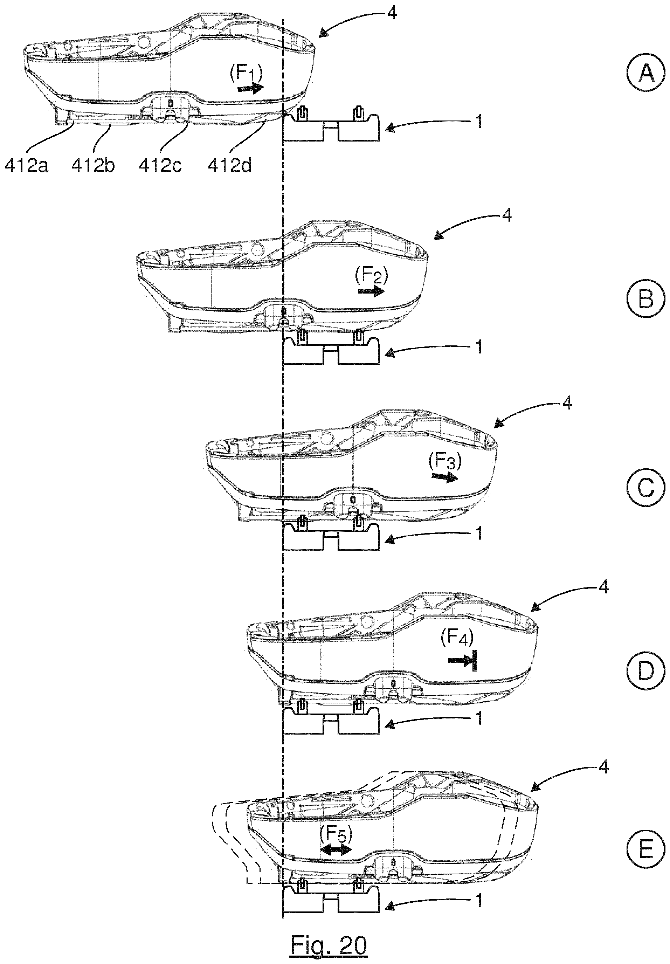

De manière analogue au deux premiers modes de réalisation de l'invention et tel que représenté sur la figure 20 il est ainsi possible de placer la nacelle 4 sur l'embase 1 par un mouvement de translation dans la direction horizontale perpendiculaire à la direction d'avancement du véhicule, selon la flèche FT représentée sur la figure 6. Pour ce faire, le coulisseau 41 et les tiges métalliques 42 de la nacelle 4 s'engagent respectivement par coulissement dans la découpe centrale 182 et les renforcements 194 et 192 de l'embase 1.

La figure 20 illustre le déplacement de la nacelle 4 sur l'embase 1 fixe, lors de son installation/solidarisation, et plus précisément cinq positions de cette nacelle par rapport à l'embase, correspondant aux étapes A à E.

Le placement/installation de la nacelle 4 sur l'embase 1 s'effectue en trois phases.

Lors de la première phase (étape A), l'utilisateur pose l'avant de la nacelle 4, c'est-à-dire la quatrième section 412d, dans la découpe centrale 182 puis pousse la nacelle selon la direction de la flèche F1. Ainsi, lors de ce déplacement, la nacelle 4 est, par le biais de la quatrième section 412d, en appui sur l'embase 1 sur la découpe centrale 182. La poursuite de ce déplacement de la nacelle fait que la quatrième section 412d vient ensuite en appui sur les supports de crochets 1540 et 1520 et pour finir sur la découpe centrale 181.

Lorsque l'utilisateur continue de pousser la nacelle 4 selon la flèche F2, la quatrième section 412d du coulisseau 41 dépasse la découpe centrale 181 située à l'autre extrémité de l'embase 1 (étape B). Commence alors la deuxième phase dans laquelle la troisième section 412c entre en contact avec la découpe centrale 182. La troisième section 412c s'étendant dans un plan plus haut que le plan de la quatrième section 412d, la surface de la nacelle 4 est plus proche de l'embase dans la deuxième phase que dans la première.

Cette différence de hauteur des quatrième 412d et troisième 412c sections permet, dans la deuxième phase et selon un déplacement selon la flèche F3, que les tiges métalliques 41 entrent en contact avec les crochets 154, 152 à proximité de la portion incurvée 422 située la plus à l'avant de la nacelle 4 (étape C).

Le déplacement en translation de la nacelle 4 force les crochets 152, 154 à passer de leur position déverrouillée à leur position verrouillée, lors du passage de la portion incurvée 422 à travers la zone d'enserrement du crochet 154. Le crochet 154 enserre alors, en combinaison avec le renforcement 1540 associé, la portion rectiligne 421 de la tige 42. Le passage des crochets 152, 154 en position verrouillée permet ainsi de limiter les déplacements latéraux de la portion rectiligne 421 tout en permettant ses déplacements longitudinaux.

Lorsque l'utilisateur poursuit le déplacement de la nacelle 4, selon la flèche F4, la troisième section 412c dépasse alors la découpe centrale 181 et c'est la deuxième section 412b qui entre en contact avec la découpe centrale 182. Ceci correspond à la troisième phase d'installation de la nacelle 4 (étape D).

La poursuite du coulissement de la nacelle 4 par rapport à l'embase 1 permet aux tiges métalliques 42 d'atteindre les seconds crochets 151, 153 qui se verrouillent de la même façon sur les tiges.

En raison de la conformation des crochets par rapport à celle des tige 42, le passage des crochets vers leur position verrouillée autour de la portion rectiligne 421 des tiges empêche tout passage ultérieur de la portion incurvée 422 au travers de la zone d'enserrement, de par le seul déplacement en translation de la nacelle 4 selon une direction opposée. La nacelle 4 est alors verrouillée sur l'embase 1.

La nacelle 4 de ce troisième mode de réalisation comprend des moyens de sélection 44 d'une position de la nacelle sur l'embase, parmi plusieurs positions (sélectionnables en fonction de l'espace disponible dans le véhicule), illustrés sur les figures 17 et 18. Pour ce faire, les moyens de sélection 44 se présente sous la forme d'un peigne, ou une crémaillère, 441 de réglage situé sensiblement dans un plan vertical confondu avec le plan longitudinal d'une des deux tiges métalliques 42. Dans ce mode de réalisation, un seul peigne 441 est mis en œuvre sur le côté droit de la nacelle 4. On comprend bien évidemment que le peigne peut être placé de l'autre côté de la nacelle ou qu'un peigne peut être prévu de chaque côté de la nacelle sans modifier le principe de fonctionnement de ces moyens de sélection de la positon de la nacelle.

Le peigne 441 est donc situé au-dessus d'une des tiges métalliques 42. Plus précisément, il est situé entre la traverse 424 et la portion incurvée avant 422 de la tige 42.

Ce peigne 441 est destiné à coopérer, lorsque la nacelle 4 est verrouillée sur l'embase 1, avec la partie supérieure des crochets 151 ou 154 (selon le siège sur lequel est fixée l'embase), tel qu'illustré sur la figure 18. Ainsi, le peigne 441 comprend une pluralité d'encoches 442 correspondant chacune à une position d'utilisation de la nacelle 4 sur l'embase 1.

Une poignée 443, située dans cet exemple à l'arrière de la nacelle 4, permet de déplacer le peignée 441 autour d'un axe de rotation (non visible) entre une position verrouillée, dans laquelle le peigne 441 est en contact avec la surface supérieure des crochets et coopère avec ces derniers, et une position déverrouillée, dans laquelle le peigne 441 est relevé, par pivotement autour de l'axe de rotation, et n'est plus en contact avec les crochets de manière à permettre un déplacement en translation des tiges 42 dans les crochets 151 à 154, laissant ainsi la possibilité de régler la position de la nacelle sur l'embase.

Comme illustré sur la figure 20, la nacelle 4 peut alors être déplacée sur l'embase 1, selon la flèche F5, afin de choisir et verrouiller la position souhaitée (étape E).

La nacelle 4 de ce troisième mode de réalisation comprend en outre des moyens anti-basculement 5 de la nacelle 4 lorsqu'elle est installée sur l'embase 1. En effet, lorsque la nacelle 4 est solidaire de l'embase 1, la partie avant de la nacelle (celle portant la tête de l'enfant) est située en porte-à-faux par rapport à l'embase. Ainsi, il existe un risque, lorsque la nacelle est déverrouillée, que cette dernière bascule et tombe de l'embase. Un tel basculement peut entrainer une chute de l'enfant, ce qui n'est absolument pas souhaitable.

Pour éviter un tel désagrément, la nacelle 4 présente donc, comme illustré sur les figures 14 à 16B, des moyens anti-basculement 5 de la nacelle qui comprennent un rebord 51 solidaire de la nacelle 4. Plus précisément, un tel rebord 51 est situé sur la face inférieure de la nacelle 4, sensiblement entre la traverse 424 et la portion incurvée arrière 423 de la tige métallique 42.

Ce rebord 51 s'étend longitudinalement, à proximité de la tige métallique 42. Dans cet exemple, le rebord n'est mis en œuvre que sur le côté droit de la nacelle 4. On comprend bien évidemment que le rebord pourrait être mis en œuvre de l'autre côté ou de chaque côté de la nacelle sans modifier le principe de fonctionnement des moyens d'anti-basculement 5.

Le rebord 51 comprend deux surfaces, une première surface 511 qui s'étend selon un plan vertical et une seconde surface qui s'étend selon un plan horizontal de façon à former un "L".

Les crochets 151 à 154 de l'embase 1 ont été modifiés par l'ajout d'une crête, ou aileron, 52 qui s'étend vers le haut lorsque le crochet est dans sa position verrouillée.

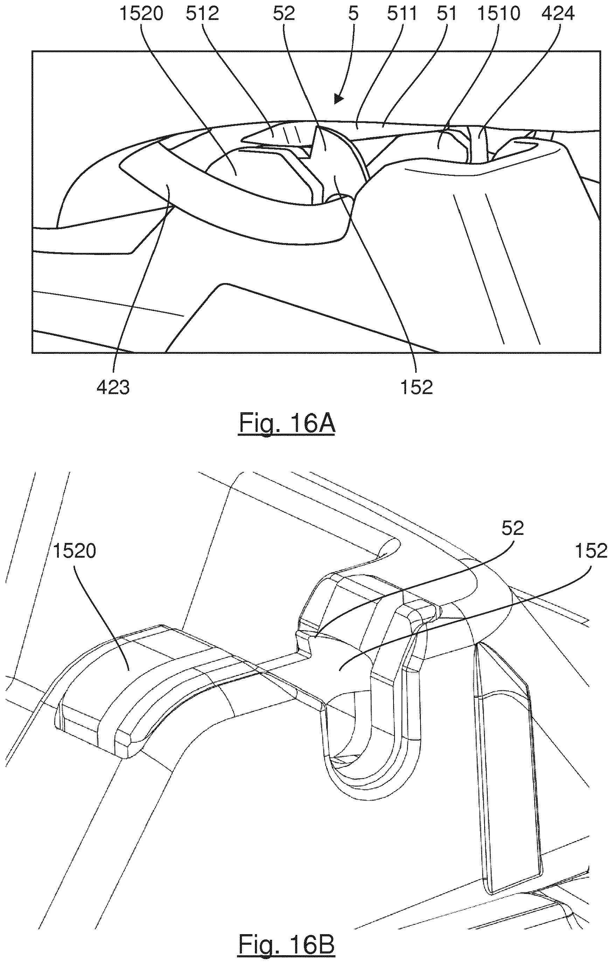

Ainsi, comme illustré sur la figure 16A, lorsque la nacelle 4 est en position sur l'embase 1, la deuxième surface 512 du rebord 51 est en appui sur le support 1520 du crochet 152, et l'aileron 52 vient en appui/butée contre la première surface 511 du rebord 51.

La mise en appui de l'aileron 52 contre la première surface 511 empêche donc le crochet 152 de passer de sa position verrouillée vers sa position déverrouillée tant que la nacelle 4 n'est pas soulevée de l'embase par l'utilisateur, évitant ainsi que les crochets ne s'ouvrent et que la nacelle 4 ne bascule lorsque la nacelle 4 est déverrouillée de l'embase 1.

On peut noter que cette solution de crochet et d'anti-basculement peut également être mise en œuvre sur un équipement qui ne prévoirait qu'une unique position de la nacelle par rapport à l'embase.

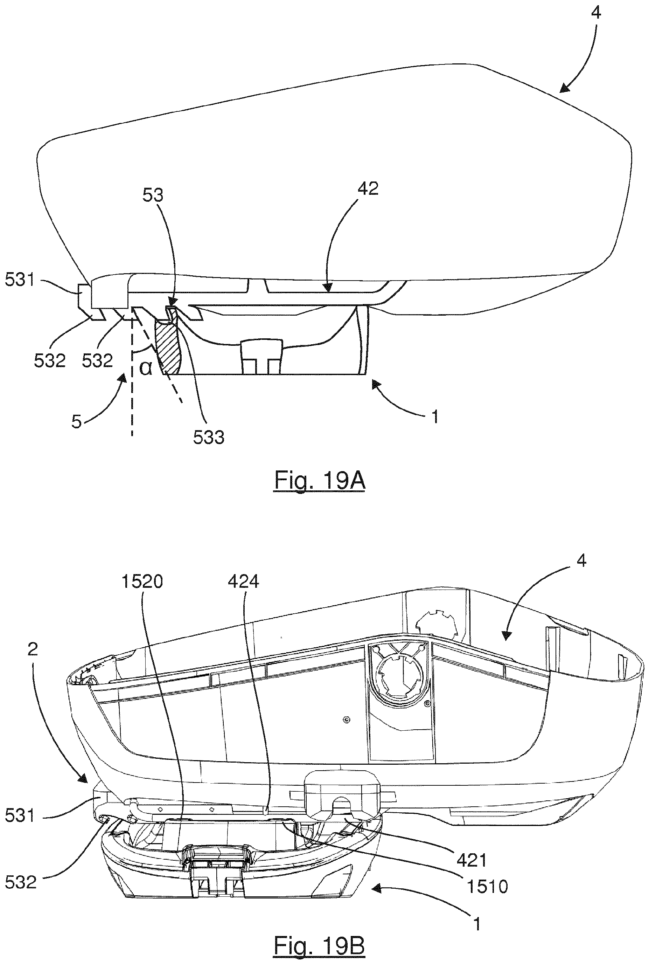

Dans une variante, illustrée sur les figures 19A et 19B, les moyens d'anti-basculement 5 sont définis par un système d'engrenage 53. Plus précisément, la face inférieure de la nacelle 4 présente une première barre 531 dentée. Les dents 532 de cette première barre 531 s'étendent selon un angle α compris entre 10° et 90°. Les dents 532 sont orientées/inclinées vers l'avant de la nacelle 4.

La première barre 531 dentée est destinée à coopérer avec une encoche 533 ménagée par l'embase 1. Cette encoche 533 présente une forme et une inclinaison correspondantes aux dents 532 de la première barre 531 portée par la nacelle 4.

Ainsi, lorsque la nacelle 4 est posée/installée sur l'embase 1 et qu'une des dents 532 de la barre 531 coopère avec l'encoche 533, l'inclinaison des dents 532 permet d'éviter le basculement de la nacelle 4 lorsque les crochets de l'embase 1 sont en position déverrouillée. L'utilisateur peut aisément retirer la nacelle 4 de l'embase 1 en tirant et levant, de façon simultanée, la nacelle 4 de manière à ce que la barre 531 ne coopère plus avec l'encoche 533.

Les moyens anti-basculement 5, selon cette variante, peuvent aisément être adaptés par l'homme du métier afin d'être mis en œuvre comme moyens de sélection de la position de la nacelle 4 sur l'embase 1. En effet, la première barre dentée 531 présente une pluralité de dents 532 qui peuvent correspondre aux différentes positions d'utilisations de la nacelle 4. Ainsi, l'utilisateur peut aisément sélectionner/modifier la position de la nacelle 4 sur l'embase 1 en déplaçant la nacelle de façon à faire coopérer l'une des dents 532 avec l'encoche 533 ménagée dans l'embase 1.

### 6.7 Effet fusible

Du fait que plusieurs positions de la nacelle sont disponibles, dont une position distale (la plus éloignée de la portière) et au moins une position intermédiaire, on peut prévoir que les moyens définissant la ou les positions intermédiaires (par exemple, selon les modes de réalisation, le peigne 441 ou la traverse 424) sont fusibles, c'est-à-dire qu'ils sont conçus et dimensionnés pour casser et/ou se déformer en présence d'un choc latéral important, correspondant à une force supérieure à un seuil prédéterminé.

Ainsi, en cas d'accident ou de choc latéral (la portière pouvant se déplacer vers l'intérieur du véhicule), la nacelle peut se déplacer vers l'intérieur du véhicule jusqu'à la position distale. L'enfant est ainsi éloigné de la zone d'impact. De plus, le déplacement et la casse ou la déformation du fusible absorbent une partie de l'énergie du choc.

### 6.8 Modes d'utilisation de l'embase et de la nacelle

Les conformations respectives de l'embase et de la nacelle permettent ainsi un assemblage particulièrement facile de la nacelle sur l'embase. La nacelle peut ainsi être montée dans un véhicule quand l'embase 1 est installée sur une place latérale du véhicule, proche d'une portière. L'adulte portant la nacelle peut facilement poser sur l'embase la portion avant de la nacelle, puis pousser la nacelle pour provoquer le coulissement et le verrouillage de la nacelle par rapport à l'embase, en position d'installation.

Dans les modes de réalisation illustrés, lorsque la nacelle est en position d'installation, la portion arrière de la nacelle, correspondant à la zone recevant les pieds de l'enfant, ne dépasse pas significativement du bord latéral de l'embase et n'empêche donc pas la fermeture de la portière du véhicule, tandis que la portion avant de la nacelle, correspondant à la zone recevant la tête de l'enfant, n'est plus au dessus de l'embase et est en porte-à-faux, par exemple au dessus d'une place centrale du véhicule.

Il est à noter également que les formes respectives de l'embase 1 et de la nacelle 2, 3 ou 4 permettent le montage de la nacelle sur l'embase dans deux positions, les pieds de l'enfant pouvant être situés à droite ou à gauche par rapport à la direction de l'avancement du véhicule. La nacelle peut ainsi être montée très facilement sur l'embase 1, que cette embase soit placée sur un siège jouxtant une portière droite ou une portière gauche du véhicule.

Une embase selon l'invention permet ainsi de supporter, au choix de l'utilisateur, soit une coque 5, comme le représente la figure 5, soit une nacelle 2, 3 ou 4, comme le représente les figures 4 et 19B, sans que la position de l'embase doive être changée. Par ailleurs, la même commande de verrouillage et de déverrouillage peut être utilisée pour verrouiller et déverrouiller une nacelle et une coque, voire les mêmes crochets. Une telle embase permet ainsi de simplifier sensiblement l'installation d'un enfant en bas âge dans un véhicule, notamment quand il est transporté dans une nacelle.

La nacelle peut comprendre au moins une poignée centrale permettant son transport. De manière additionnelle, la nacelle peut comprendre également une poignée d'extrémité, formée à l'arrière de la nacelle, permettant de contrôler le guidage en translation de la nacelle dans l'embase. Ces poignées permettent ainsi une manipulation aisée de la nacelle dans l'espace restreint offert par l'habitacle du véhicule, en particulier lors des étapes de solidarisation et de désolidarisation de la nacelle par rapport à l'embase, une main supportant l'essentiel du poids à l'aide des poignées centrales, et l'autre main équilibrant et guidant la nacelle pour l'assemblage avec l'embase.

## Revendications

1. Equipement de transport d'un enfant en bas âge dans un véhicule, comprenant une embase (1) destinée à être solidarisée à un siège dudit véhicule et une nacelle (2, 3, 4) permettant d'accueillir ledit enfant en position allongée dans la direction longitudinale de la nacelle (2, 3, 4), et pouvant être solidarisée à ladite embase (1),
ladite nacelle (2, 3, 4) et ladite embase (1) comprenant des éléments de guidage complémentaires permettant de réaliser un guidage en translation entre ladite nacelle (2, 3, 4) et ladite embase (1), selon une direction de translation sensiblement parallèle à la direction longitudinale de la nacelle (2, 3, 4),
**caractérisé en ce que** ladite nacelle (2, 3, 4) et/ou ladite embase (1) comprend des moyens de sélection d'une position de transport parmi au moins deux positions de transport possibles, distribuées selon ladite direction de translation.

2. Equipement selon la revendication 1, **caractérisé en ce qu'**il offre au moins deux positions de transport :
- Au moins une première position, dite position de gabarit, conforme à un gabarit compatible avec tous les véhicules équipés de crochets ISOFIX ;
- au moins une deuxième position, dite position de gain de place, dans laquelle la nacelle (2, 3, 4) est rapprochée de la portière du véhicule, utilisable dans au moins certains véhicules, ménageant un espace disponible entre le bord dudit gabarit et la portière, du fait de l'implantation de crochets ISOFIX.

3. Equipement selon l'une quelconque des revendications 1 à 2, **caractérisé en ce qu'**au moins un desdits éléments de guidage portent des éléments d'indexation, définissant lesdites positions de transport.

4. Equipement selon l'une quelconque des revendications 1 à 3, **caractérisé en ce qu'**il comprend des moyens de verrouillage et de déverrouillage comprenant au moins un crochet (151, 152, 153, 154) mobile entre une position déverrouillée et une position verrouillée, monté sur ladite embase (1).

5. Equipement selon la revendication 4, **caractérisé en ce que** lesdits moyens de verrouillage et de déverrouillage comprennent, sur ladite nacelle (2, 3, 4), au moins une tige (33, 34 ; 104, 105 ; 42) coopérant avec le ou lesdits crochets (151, 152, 153, 154).

6. Equipement selon la revendication 5, **caractérisé en ce qu'**une des extrémités de la ou desdites tiges (33, 34 ; 104, 105 ; 42) est incurvée vers le haut, de façon à entraîner le verrouillage d'un crochet (151, 152, 153, 154) sur la tige, lorsque ladite extrémité entre en contact avec ledit crochet.

7. Equipement selon l'une quelconque des revendications 5 à 6, **caractérisé en ce que** la nacelle (4) comprend deux tiges (42), s'étendant de part et d'autre de la nacelle, les tiges étant reliées entre-elles par une traverse (424) solidaire de la nacelle.

8. Equipement selon l'une quelconque des revendications 4 à 7, **caractérisé en ce qu'**au moins une desdites tiges porte des éléments d'indexation permettant de bloquer en translation ladite nacelle (2, 3, 4), en coopération avec au moins un desdits crochets (151, 152, 153, 154), dans la position de transport sélectionnée.

9. Equipement selon l'une quelconque des revendications 1 à 2, **caractérisé en ce que** ladite nacelle (4) porte un peigne de réglage (42) présentant une pluralité de rainures (442), définissant lesdites positions de transport.

10. Equipement selon l'une quelconque des revendications 1 à 9, **caractérisé en ce que** ladite embase (1) comprend au moins une portion (181, 182) formant coulisse, apte à guider en translation au moins un coulisseau (31, 41) complémentaire lié à une nacelle (3, 4).

11. Equipement selon la revendication 10, **caractérisé en ce que** ledit coulisseau (41) présente plusieurs portions (412a, 412b ,412c ,412d) s'étendant selon au moins deux plans horizontaux parallèles situés à des hauteurs différentes par rapport à la face inférieure de la nacelle (4).

12. Equipement de transport selon l'une quelconque des revendications 1 à 11, **caractérisé en ce que** l'écart entre les deux positions de transport extrêmes est compris entre 100 et 150 millimètres.

13. Equipement de transport selon l'une quelconque des revendications 1 à 12, **caractérisé en ce que** les moyens assurant le maintien dans une des positions de gain de place sont fusibles, de façon à permettre une translation de ladite nacelle (2, 3, 4) vers une position de gabarit, en cas de choc latéral supérieur à un seuil prédéterminé.

14. Nacelle d'un équipement selon l'une quelconque des revendications 1 à 13.

## Patentansprüche

1. Ausrüstung zum Transport eines Kindes in jungen Jahren in einem Fahrzeug, umfassend einen Basisträger (1), der dazu bestimmt ist, an einem Sitz des Fahrzeugs befestigt zu werden, und einen Tragekorb (2, 3, 4) zur Aufnahme des Kindes in einer liegenden Position in der Längsrichtung des Tragekorbs (2, 3, 4), der an dem Basisträger (1) befestigt werden kann,
wobei der Tragekorb (2, 3, 4) und der Basisträger (1) komplementäre Führungselemente aufweisen, die es ermöglichen, eine translatorische Führung zwischen dem Tragekorb (2, 3, 4) und dem Basisträger (1) in einer Translationsrichtung zu gewährleisten, die im Wesentlichen parallel zur Längsrichtung des Tragekorbs (2, 3, 4) verläuft,
**dadurch gekennzeichnet, dass** der Tragekorb (2, 3, 4) und/oder der Basisträger (1) Mittel zum Auswählen einer Transportposition aus mindestens zwei möglichen Transportpositionen umfasst, die entlang der Translationsrichtung verteilt sind.

2. Ausrüstung nach Anspruch 1, **dadurch gekennzeichnet, dass** es mindestens zwei Transportpositionen bietet:
- Mindestens eine erste Position, die als Vorrichtungsposition bezeichnet wird, die einer mit allen mit ISOFIX-Haken ausgestatteten Fahrzeugen kompatiblen Vorrichtung entspricht;
- mindestens eine zweite Position, die als platzsparende Position bezeichnet wird, in der der Tragekorb (2, 3, 4) näher an die Tür des Fahrzeugs gebracht wird, die zumindest in einigen Fahrzeugen verwendet werden kann, wobei zwischen dem Rand der besagten Vorrichtung und der Tür aufgrund der Installation von ISOFIX-Haken ein Raum frei bleibt.

3. Ausrüstung nach einem der Ansprüche 1 bis 2, **dadurch gekennzeichnet, dass** mindestens eines der Führungselemente Indexierungselemente trägt, die die Transportpositionen definieren.

4. Ausrüstung nach einem der Ansprüche 1 bis 3, **dadurch gekennzeichnet, dass** sie Ver- und Entriegelungsmittel umfasst, die mindestens einen Haken (151, 152, 153, 154) umfassen, der zwischen einer entriegelten Position und einer verriegelten Position beweglich ist und an den Basisträger (1) montiert ist.

5. Ausrüstung nach Anspruch 4, **dadurch gekennzeichnet, dass** die Verriegelungs- und Entriegelungsmittel an dem Tragekorb (2, 3, 4) mindestens eine Stange (33, 34; 104, 105; 42) umfassen, die mit dem Haken oder den Haken (151, 152, 153, 154) zusammenwirkt.

6. Ausrüstung nach Anspruch 5, **dadurch gekennzeichnet, dass** eines der Enden der Stange(n) (33, 34; 104, 105; 42) nach oben gebogen ist, um die Verriegelung eines Hakens (151, 152, 153, 154) an der Stange zu bewirken, wenn das Ende in Kontakt mit dem Haken kommt.

7. Ausrüstung nach einem der Ansprüche 5 bis 6, **dadurch gekennzeichnet, dass** der Tragekorb (4) zwei Stangen (42) umfasst, die sich auf beiden Seiten des Tragekorbs erstrecken, wobei die Stangen durch ein mit dem Tragekorb integriertes Querelement (424) miteinander verbunden sind.

8. Ausrüstung nach einem der Ansprüche 4 bis 7, **dadurch gekennzeichnet, dass** mindestens eine der Stangen Indexierungselemente trägt, die es ermöglichen, den Tragekorb (2, 3, 4) in der gewählten Transportposition, in Zusammenwirkung mit mindestens einem der Haken (151, 152, 153, 154), translatorisch zu arretieren.

9. Ausrüstung nach einem der Ansprüche 1 bis 2, **dadurch gekennzeichnet, dass** der Tragekorb (4) einen Einstellkamm (42) trägt, der eine Vielzahl von Nuten offenbart, (442), die die Transportpositionen definieren.

10. Ausrüstung nach einem der Ansprüche 1 bis 9, **dadurch gekennzeichnet, dass** der Basisträger (1) mindestens einen Abschnitt (181, 182) umfasst, der einen Gleitabschnitt bildet, der geeignet ist, mindestens ein komplementäres Gleitstück (31, 41), das mit einem Tragekorb (3, 4) verbunden ist, in Translation zu führen.

11. Ausrüstung nach Anspruch 10, **dadurch gekennzeichnet, dass** das Gleitstück (41) mehrere Abschnitte (412a, 412b, 412c, 412d) aufweist, die sich in mindestens zwei parallelen horizontalen Ebenen erstrecken, die sich auf unterschiedlichen Höhen in Bezug auf die Unterseite des Tragekorbes (4) befinden.

12. Ausrüstung zum Transport nach einem der Ansprüche 1 bis 11, **dadurch gekennzeichnet, dass** der Abstand zwischen den beiden extremen Transportpositionen zwischen 100 und 150 Millimeter beträgt.

13. Ausrüstung zum Transport nach einem der Ansprüche 1 bis 12, **dadurch gekennzeichnet, dass** die Mittel, die dafür sorgen, dass sie in einer der raumsparenden Positionen gehalten wird, Sicherungsmittel sind, um im Falle eines seitlichen Aufpralls, der größer als ein vorbestimmter Schwellenwert ist, eine Verschiebung des Tragekorbs (2, 3, 4) in Richtung einer Vorrichtungsposition zu ermöglichen.

14. Tragekorb einer Ausrüstung nach einem der Ansprüche 1 bis 13.

## Claims

1. Equipment for transporting a young child in a vehicle, comprising a base (1) intended to be anchored to a seat of said vehicle and a carry cot (2, 3, 4) for accommodating said child in the laid-back position in the longitudinal direction of the carry cot (2, 3, 4), and which can be firmly secured to said base (1),
said carry cot (2, 3, 4) and said base (1) comprising guide elements of complementary shapes allowing a translational guidance to be performed between said carry cot (2, 3, 4) and said base (1), in a direction of translational movement substantially parallel to the longitudinal direction of the carry cot (2, 3, 4),
**characterised in that** said carry cot (2, 3, 4) and/or said base (1) comprises means of selecting a transport position from among at least two possible transport positions which are distributed in said direction of translational movement.

2. Equipment according to claim 1, **characterised in that** it provides at least two transport positions:
- at least one first so-called fixture position that is compliant with a child restraint fixture compatible with all vehicles equipped with ISOFIX attachments;
- at least one second so-called space-saving position, wherein the carry cot (2, 3, 4) is brought closer to the door of the vehicle, which can be used in at least certain vehicles, making room available between the edge of said fixture and the door, as a result of the layout of ISOFIX attachments.

3. Equipment according to any of claims 1 to 2, **characterised in that** at least one of said guide elements supports indexing elements defining said transport positions.

4. Equipment according to any of claims 1 to 3, **characterised in that** it comprises locking and unlocking means comprising at least one hook (151, 152, 153, 154) capable of moving between an unlocked position and a locked position, mounted on said base (1).

5. Equipment according to claim 4, **characterised in that** said locking and unlocking means comprise, on said carry cot (2, 3, 4), at least one rod (33, 34; 104, 105; 42) engaging with said one or more hooks (151, 152, 153, 154).

6. Equipment according to claim 5, **characterised in that** one of the ends of said one or more rods (33, 34; 104, 105; 42) is curved upwards so as to cause the locking of a hook (151, 152, 153, 154) onto the rod when said end comes into contact with said hook.

7. Equipment according to any of claims 5 to 6, **characterised in that** the carry cot (4) comprises two rods (42), extending on either side of the carry cot, the rods being connected to one another by a crosspiece (424) firmly secured to the carry cot.

8. Equipment according to any of claims 4 to 7, **characterised in that** at least one of said rods supports indexing elements allowing said carry cot (2, 3, 4) to be blocked in translation, in cooperation with at least one of said hooks (151, 152, 153, 154), in the selected transport position.

9. Equipment according to any of claims 1 to 2, **characterised in that** said carry cot (4) supports an adjustable comb (42) having a plurality of grooves (442) defining said transport positions.

10. Equipment according to any of claims 1 to 9, **characterised in that** said base (1) comprises at least one portion (181, 182) forming a slide, capable of guiding the translational movement of at least one additional slider (31, 41) connected to a carry cot (3, 4).

11. Equipment according to claim 10, **characterised in that** said slider (41) has a plurality of portions (412a, 412b ,412c ,412d) extending along at least two parallel, horizontal planes situated at different heights relative to the bottom face of the carry cot (4).

12. Transport equipment according to any of claims 1 to 11, **characterised in that** the difference between the two maximum transport positions lies in the range 100 to 150 millimetres.

13. Transport equipment according to any of claims 1 to 12, **characterised in that** the means for holding one of the space-saving positions are fusible so as to allow a translational movement of said carry cot (2, 3, 4) to a fixture position, in the event of a side impact that exceeds a predetermined threshold.

14. Carry cot of a piece of equipment according to any of claims 1 to 13.
